(19) Europäisches Patentamt / European Patent Office / Office européen des brevets

(11) **EP 4 659 888 A1**

(12) **EUROPEAN PATENT APPLICATION**
published in accordance with Art. 153(4) EPC


(43) Date of publication:
**10.12.2025 Bulletin 2025/50**

(21) Application number: **24750312.1**

(22) Date of filing: **30.01.2024**

(51) International Patent Classification (IPC):
***B23K 9/23*** *(2006.01)* ***B21D 22/20*** *(2006.01)*
***B23K 26/21*** *(2014.01)* ***B23K 26/36*** *(2014.01)*
***B23K 26/322*** *(2014.01)* ***B23K 31/00*** *(2006.01)*
***B23K 35/30*** *(2006.01)* ***C21D 1/18*** *(2006.01)*
***C21D 9/00*** *(2006.01)* ***C21D 9/50*** *(2006.01)*
***C22C 21/02*** *(2006.01)* ***C22C 38/00*** *(2006.01)*
***C22C 38/58*** *(2006.01)*

(52) Cooperative Patent Classification (CPC):
**B23K 26/322; B21D 22/20; B23K 9/025; B23K 9/23; B23K 26/211; B23K 26/26; B23K 35/30; C21D 1/18; C21D 9/00; C21D 9/50; C22C 21/02; C22C 38/00; C22C 38/58;**
B23K 2101/185; B23K 2101/34; (Cont.)

(86) International application number:
**PCT/JP2024/002953**

(87) International publication number:
**WO 2024/162363 (08.08.2024 Gazette 2024/32)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **30.01.2023 JP 2023011644**



(71) Applicant: **NIPPON STEEL CORPORATION**
**Chiyoda-ku**
**Tokyo 100-8071 (JP)**

(72) Inventors:
- **TATSUMI, Yujiro**
  **Tokyo 100-8071 (JP)**
- **OKADA, Tohru**
  **Tokyo 100-8071 (JP)**
- **FUJIMOTO, Hiroki**
  **Tokyo 100-8071 (JP)**

(74) Representative: **Zimmermann & Partner Patentanwälte mbB**
**P.O. Box 330 920**
**80069 München (DE)**


(54) **TAILORED BLANK, PRESS-MOLDED ARTICLE, METHOD FOR PRODUCING TAILORED BLANK, AND METHOD FOR PRODUCING PRESS-MOLDED ARTICLE**


(57) A tailored blank includes: a first steel sheet; a second steel sheet butt-welded to the first steel sheet; and a weld metal connecting an end portion of the first steel sheet and an end portion of the second steel sheet, in which a sheet thickness h1 and a carbon concentration C1 of the first steel sheet and a sheet thickness h2 and a carbon concentration C2 of the second steel sheet satisfy predetermined formulas, a step difference LDa between the surface A S1A of the first steel sheet and the surface A S2A of the second steel sheet and a step difference LDb between the surface B S1B of the first steel sheet and the surface B S2B of the second steel sheet satisfy a predetermined formula, the first steel sheet includes an aluminum-based plated layer on the surface A S1A of the first steel sheet, the aluminum-based plated layer disposed on the surface A S1A of the first steel sheet is in contact with the weld metal, the first steel sheet includes a base exposed portion on the surface B S1B of the first steel sheet, and the base exposed portion on the surface B S1B of the first steel sheet is in contact with the weld metal.


EP 4 659 888 A1

FIG. 1

SB
1
S2B
131
13
131
15
14
LDb
S1B
h2
h1
LDa
S2A
131
131
141
142
S1A
16
12
SA
11

(52) Cooperative Patent Classification (CPC): (Cont.)
B23K 2103/04

## Description

TECHNICAL FIELD

The present invention relates to a tailored blank, a press-formed article, a method for manufacturing a tailored blank, and a method for manufacturing a press-formed article.

Priority is claimed on Japanese Patent Application No. 2023-011644, filed January 30, 2023, the content of which is incorporated herein by reference.

BACKGROUND ART

In recent years, to protect global environment by reducing $CO_2$ gas emissions, weight reduction of an automobile vehicle body is an urgent issue in the field of automobiles. To solve the issue, studies on applying a high strength steel sheet have been actively performed, and the strength of such steel sheets (plated steel sheet) has been increasing more and more.

Hot pressing (hereinafter also referred to as "hot stamping") has attracted attention as one technique of forming an automobile member. In hot stamping, a steel sheet is heated to a high temperature and press-formed in a temperature range equal to or higher than Ar3 transformation temperature. Also in hot stamping, a press-formed steel sheet is rapidly cooled by removing heat with a die, and transformation is caused simultaneously with formation while a press pressure is applied. Hot stamping is a technique capable of manufacturing a hot press-formed article (hereinafter also referred to as a "hot stamped product") having high strength and excellent shape fixability by the above steps.

To improve yield and functionality of a press-formed article of an automobile member, a tailored blank in which end surfaces of at least two steel sheets are butted and joined by laser welding, plasma welding, or the like is applied as a press material. The tailored blank can include two or more steel sheets having different sheet thicknesses, strengths, and the like. According to the tailored blank, the functionality of the automotive member can be improved, and the number of components of the automotive member can be reduced. By hot-stamping the tailored blank, a press-formed article having high strength and high functionality can be manufactured.

When the tailored blank is used as a press material and an automobile member is formed by hot stamping, the tailored blank is heated to, for example, a temperature range of 800°C to 1000°C. Therefore, aluminum-based plating such as Al-Si having a high boiling point is often applied to a steel sheet as a material of the tailored blank for hot stamping.

In manufacturing a tailored blank using an aluminum-based plated steel sheet as a material, various measures are taken considering an influence of aluminum-based plating on a weld metal. For example, attempts have been made to reduce an Al concentration of the weld metal, facilitate quenching of a weld metal portion, and improve strength of the tailored blank by removing the aluminum-based plating of a portion to be welded. Attempts have been made to achieve both strength and corrosion resistance of the weld metal portion of the tailored blank by setting the Al concentration of the weld metal within an appropriate range by leaving part of the aluminum-based plating when removing part of the aluminum-based plating of the portion to be welded.

Patent Document 1 discloses a method for manufacturing a welded component having extremely high mechanical characteristics from a coated laminated plate, in which a plate is configured of a substrate and a precoat, the above precoat is configured of an intermetallic alloy layer in contact with the above substrate and on which a metal alloy layer is placed, one zone does not include the above metal alloy layer on at least one precoated surface of the above plate, and the above zone is positioned in the vicinity of the above plate.

Patent Document 2 discloses a method for producing a welded steel blank, the method including: providing two precoated sheets, each including a steel substrate having a precoat on each of two main surfaces thereof, and each sheet including a removal zone from which the precoat is removed on a welding edge portion of each main surface; and butt-welding the sheets using filler wires to produce a weld joint having an aluminum content $Al_{WJ}$ contained in a range of 0.1 wt% to 1.2 wt%.

Patent Document 3 discloses a tailored blank including: a first weld metal portion; and at least two steel sheet portions connected via the first weld metal portion, in which each of the at least two steel sheet portions includes a first plated portion provided with an intermetallic compound layer and an aluminum coating layer on a surface of a base steel sheet in order from the base steel sheet side, and a first exposed portion from which the base steel sheet is exposed, and the first plated portion, the first exposed portion, and the first weld metal portion in each of the steel sheet portions are arranged on the same plane in order on both surfaces of the base steel sheet in a second direction perpendicular to a thickness direction of each of the steel sheet portions and oriented from the first plated portion to the first weld metal portion.

Patent Document 4 discloses a tailored blank including: a first weld metal portion; and at least one steel sheet portion connected to another steel sheet portion via the first weld metal portion, in which the at least one steel sheet portion includes a first plated portion provided with an intermetallic compound layer and an aluminum coating layer on a surface of a base steel sheet in order from the base steel sheet side, and a first exposed portion from which the base steel sheet is exposed, the first plated portion, the first exposed portion, and the first weld metal portion in each of the steel sheet portions are arranged on the same plane in order on both surfaces of the base steel sheet in a second direction perpendicular to a thickness direction of each of the steel sheet portions and oriented from the first plated portion to the first weld metal portion, and an aluminum concentration of the first weld metal portion is higher than an aluminum concentration of the steel sheet portion.

Citation List

Patent Document

Patent Document 1: Published Japanese Translation No. 2009-534529 of the PCT International Publication
Patent Document 2: Published Japanese Translation No. 2022-515425 of the PCT International Publication
Patent Document 3: PCT International Publication No. WO 2019/093440
Patent Document 4: PCT International Publication No. WO 2019/244524

SUMMARY OF INVENTION

Technical Problem

The tailored blank can be manufactured from two steel sheets having different sheet thicknesses. However, the present inventors have found that, when a thin sheet is an aluminum-based plated steel sheet or when aluminum-based plating remains at a portion to be welded at an end portion of the thin sheet, cracks are likely to occur on a weld metal.
Such a problem does not occur in a tailored blank manufactured without leaving the aluminum-based plating in the portion to be welded. Therefore, the aluminum-based plating is believed to be the cause of the cracks. However, when the aluminum-based plating does not remain in the portion to be welded, an effect of improving corrosion resistance of a weld metal cannot be obtained. Such a problem is solved by reducing the difference between the sheet thicknesses of the two steel sheets. However, then, the degree of freedom in designing the tailored blank is impaired.
In any of Patent Document 1 to 4, such a problem is not considered, and a method for solving such a problem is not presented.
In view of the above circumstances, an object of the present invention is to provide a tailored blank and a press-formed article that are manufactured from two or more steel sheets having different sheet thicknesses and can ensure both strength and corrosion resistance of a weld metal, and a method for manufacturing the tailored blank and the press-formed article.

Solution to Problem

The gist of the present invention is as follows.

(1) A tailored blank according to a first embodiment of the present invention including: a first steel sheet; a second steel sheet butt-welded to the first steel sheet; and a weld metal connecting an end portion of the first steel sheet and an end portion of the second steel sheet, in which an average Al concentration of the weld metal is 0.05 to 1.00 mass%, a sheet thickness h1 and a carbon concentration C1 of the first steel sheet and a sheet thickness h2 and a carbon concentration C2 of the second steel sheet satisfy Formulas 1 and 2 below,

$$h2/h1 \geq 1.1 \ldots \text{(Formula 1)},$$

$$h1 \times C1 \leq h2 \times C2 \ldots \text{(Formula 2)},$$

when surfaces of the first steel sheet and the second steel sheet on a surface A side of the tailored blank are defined as a surface A S1A of the first steel sheet and a surface A S2A of the second steel sheet, respectively, and surfaces of the first steel sheet and the second steel sheet on a surface B side of the tailored blank are defined as a surface B S1B of the first steel sheet and a surface B S2B of the second steel sheet, respectively, a step difference LDa between the surface A S1A of the first steel sheet and the surface A S2A of the second steel sheet and a step difference LDb between the surface B S1B of the first steel sheet and the surface B S2B of the second steel sheet satisfy Formula 3 below,

$$LDb \geq 1.1 \times LDa... \text{ (Formula 3)},$$

the first steel sheet includes an aluminum-based plated layer on the surface A S1A of the first steel sheet, the aluminum-based plated layer disposed on the surface A S1A of the first steel sheet is in contact with the weld metal, the first steel sheet includes a base exposed portion on the surface B S1B of the first steel sheet, and the base exposed portion on the surface B S1B of the first steel sheet is in contact with the weld metal.

(2) In the tailored blank described in above (1), preferably, the second steel sheet is an aluminum-based plating steel sheet, a zinc-based plating steel sheet, or a non-plated steel sheet.

(3) In the tailored blank described in above (1) or (2), preferably, the sheet thickness h1 of the first steel sheet and the sheet thickness h2 of the second steel sheet satisfy Formula 4 below.

$$h2/h1 \geq 1.5... \text{ (Formula 4)}$$

(4) In the tailored blank described in any one of above (1) to (3), preferably, the first steel sheet includes an aluminum-based plated layer on the surface B S1B of the first steel sheet, and the base exposed portion on the surface B S1B of the first steel sheet is disposed between the aluminum-based plated layer of the surface B S1B of the first steel sheet and the weld metal.

(5) In the tailored blank described in any one of above (1) to (4), preferably, the surface A S1A of the first steel sheet and the surface A S2A of the second steel sheet are on substantially the same plane.

(6) In the tailored blank described in any one of above (1) to (5), preferably, the carbon concentration C1 is different from the carbon concentration C2.

(7) A press-formed article according to a second embodiment of the present invention including: a first steel material; a second steel material butt-welded to the first steel material; and a weld metal connecting an end portion of the first steel material and an end portion of the second steel material, in which an average Al concentration of the weld metal is 0.05 to 1.00 mass%, a thickness H1 and a tensile strength T1 of the first steel material and a thickness H2 and a tensile strength T2 of the second steel material satisfy Formulas 5 and 6 below,

$$H2/H1 \geq 1.1... \text{ (Formula 5)},$$

$$H1 \times T1 \leq H2 \times T2... \text{ (Formula 6)},$$

when surfaces of the first steel material and the second steel material on a surface A side of the press-formed article are defined as a surface A S3A of the first steel material and a surface A S4A of the second steel material, respectively, and surfaces of the first steel material and the second steel material on a surface B side of the press-formed article are defined as a surface B S3B of the first steel material and a surface B S4B of the second steel sheet, respectively, a step difference LD2a between the surface A S3A of the first steel material and the surface A S4A of the second steel material and a step difference LD2b between the surface B S3B of the first steel material and the surface B S4B of the second steel material satisfy Formula 7 below,

$$LD2b \geq 1.1 \times LD2a... \text{ (Formula 7)},$$

the first steel material includes an aluminum-based plated layer on the surface A S3A of the first steel material, the aluminum-based plated layer disposed on the surface A S3A of the first steel material is in contact with the weld metal, the first steel material includes a base exposed portion on the surface B S3B of the first steel material, and the base exposed portion of the surface B S3B of the first steel material is in contact with the weld metal.

(8) In the press-formed article described in above (7), preferably, the second steel material is an aluminum-based plated steel material, a zinc-based plated steel material, or a non-plated steel material.

(9) In the press-formed article described in above (7) or (8), preferably, the thickness H1 of the first steel material and the thickness H2 of the second steel material satisfy Formula 8 below.

$$H2/H1 \geq 1.5... \text{ (Formula 8)}$$

(10) In the press-formed article described in any one of above (7) to (9), preferably, the first steel material includes an aluminum-based plated layer on the surface B S3B of the first steel material, and the base exposed portion on the surface B S3B of the first steel material is disposed between the aluminum-based plated layer of the surface B S3B of the first steel material and the weld metal.

(11) In the press-formed article described in any one of above (7) to (10), preferably, the surface A S3A of the first steel material and the surface A S4A of the second steel material are on substantially the same plane.

(12) A method for manufacturing a tailored blank according to a third embodiment of the present invention, the method including: a step of butt-welding a first steel sheet and a second steel sheet to form a weld metal connecting an end portion of the first steel sheet and an end portion of the second steel sheet, in which an average Al concentration of the weld metal is 0.05 to 1.00 mass%, a sheet thickness h1 and a carbon concentration C1 of the first steel sheet and a sheet thickness h2 and a carbon concentration C2 of the second steel sheet satisfy Formulas 1 and 2 below,

$$h2/h1 \geq 1.1 \ldots \text{ (Formula 1)},$$

$$h1 \times C1 \leq h2 \times C2 \ldots \text{ (Formula 2)},$$

when surfaces of the first steel sheet and the second steel sheet on a surface A side of the tailored blank are defined as a surface A S1A of the first steel sheet and a surface A S2A of the second steel sheet, respectively, and surfaces of the first steel sheet and the second steel sheet on a surface B side of the tailored blank are defined as a surface B S1B of the first steel sheet and a surface B S2B of the second steel sheet, respectively, a step difference LDa between the surface A S1A of the first steel sheet and the surface A S2A of the second steel sheet and a step difference LDb between the surface B S1B of the first steel sheet and the surface B S2B of the second steel sheet satisfy Formula 3 below,

$$LDb \geq 1.1 \times LDa \ldots \text{ (Formula 3)},$$

an aluminum-based plated layer is disposed on the surface A S1A of the first steel sheet, the aluminum-based plated layer disposed on the surface A S1A of the first steel sheet is brought into contact with the weld metal, a base exposed portion is provided on the surface B S1B of the first steel sheet, and the base exposed portion on the surface B S1B of the first steel sheet is brought into contact with the weld metal.

(13) In the method for manufacturing a tailored blank described in above (12), preferably, the aluminum-based plated layer is disposed on the side B S1B of the first steel sheet, the method further comprises a step of forming the base exposed portion by removing a portion to be welded on the surface B S1B of the first steel sheet and the aluminum-based plated layer in the vicinity of the portion to be welded, and the base exposed portion of the surface B S1B of the first steel sheet is disposed between the aluminum-based plated layer of the surface B S1B of the first steel sheet and the weld metal.

(14) In the method for manufacturing a tailored blank described in above (13), preferably, the aluminum-based plated layer is removed on an entire area of the portion to be welded.

(15) In the method for manufacturing a tailored blank described in above (13), preferably, the aluminum-based plated layer remains at a tip end portion of the surface B S1B of the first steel sheet in the portion to be welded.

(16) In the method for manufacturing a tailored blank described in any one of above (13) to (15), the method further including: a step of removing the portion to be welded on the surface A S1A of the first steel sheet and a surface layer of the aluminum-based plated layer in the vicinity of the portion to be welded, and leaving an intermetallic compound layer of the aluminum-based plated layer.

(17) In the method for manufacturing a tailored blank described in any one of above (13) to (16), preferably, the carbon concentration C1 is different from the carbon concentration C2.

(18) A method for manufacturing a press-formed article according to a fourth embodiment of the present invention, the method including: a step of hot-stamping the tailored blank according to any one of above (1) to (6).

## Advantageous Effects of Invention

According to the present invention, it is possible to provide a tailored blank and a press-formed article that are manufactured from two or more steel sheets having different sheet thicknesses and can ensure both strength and corrosion resistance of a weld metal, and a method for manufacturing the tailored blank and the press-formed article.

## BRIEF DESCRIPTION OF DRAWINGS

[FIG. 1] A cross-sectional view of an example of a tailored blank according to a first embodiment.
[FIG. 2] An example of an aspect of removal of an aluminum-based plated layer in a method for manufacturing a tailored blank according to a third embodiment.
[FIG. 3] An example of an aspect of removal of the aluminum-based plated layer in the method for manufacturing a tailored blank according to the third embodiment.
[FIG. 4] An example of an aspect of removal of the aluminum-based plated layer in the method for manufacturing a tailored blank according to the third embodiment.
[FIG. 5] An example of an aspect of removal of the aluminum-based plated layer in the method for manufacturing a tailored blank according to the third embodiment.
[FIG. 6] A perspective view of the tailored blank including three steel sheets.
[FIG. 7] An example of an aspect of removal of the aluminum-based plated layer in the method for manufacturing a tailored blank according to the third embodiment.
[FIG. 8] A cross-sectional view of an example of a press-formed article according to a second embodiment.

DESCRIPTION OF EMBODIMENTS

(1. Tailored Blank 1)

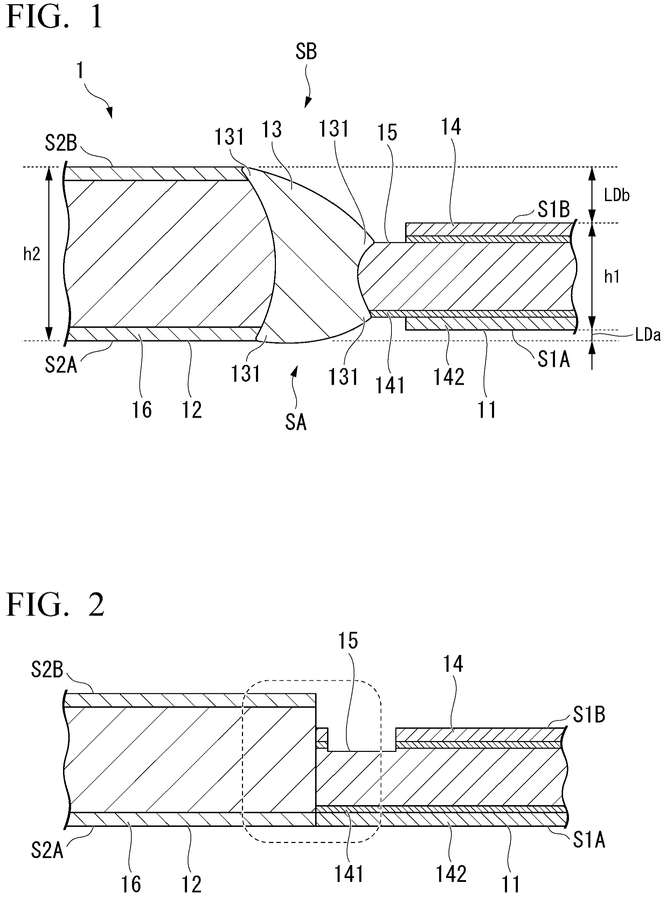

First, a tailored blank 1 according to a first embodiment of the present invention will be described with reference to FIG. 1 and the like. For convenience of description, a plated layer in FIG. 1 and the like is described to be much thicker than an actual plated layer.

The tailored blank 1 according to the first embodiment includes a first steel sheet 11, a second steel sheet 12 butt-welded to the first steel sheet 11, and a weld metal 13 connecting an end portion of the first steel sheet 11 and an end portion of the second steel sheet 12. The tailored blank 1 according to the first embodiment is a type of butt joint. The tailored blank 1 according to the first embodiment is obtained by butt-welding a plurality of steel sheets and can be used as a material of a press-formed article.

Hereinafter, for convenience of description, the weld metal 13 and a peripheral portion thereof may be referred to as a "weld". A location where a surface of a steel sheet as a welding base metal and a surface of the weld metal 13 intersect may be referred to as a "toe". A region in the vicinity of the toe of the weld metal 13 may be referred to as a "toe portion 131". In a cross section obtained by cutting the weld of the tailored blank 1 according to the present embodiment perpendicularly to an extending direction of the weld metal 13, the number of the toe portions 131 is four.

(Average Al Concentration of Weld Metal 13)

In the tailored blank 1 according to the first embodiment, an average Al concentration of the weld metal 13 is defined. A method for measuring the average Al concentration will be described later.

The average Al concentration of the weld metal 13 is in a range of 0.05 to 1.00 mass%. Al may lower hardenability of the weld metal 13 and facilitate fracture of the weld metal 13. Meanwhile, Al has an effect of improving corrosion resistance of the weld metal 13. When the average Al concentration of the weld metal 13 is within the above range, the weld metal 13 has high corrosion resistance and is hardly fractured. The average Al concentration of the weld metal 13 may be 0.08 mass% or more, 0.10 mass% or more, 0.15 mass% or more, or 0.30 mass% or more. The average Al concentration of the weld metal 13 may be 0.90 mass% or less, 0.80 mass% or less, 0.70 mass% or less, or 0.60 mass% or less.

As will be described later, the Al concentration may be non-uniform inside the weld metal 13 of the tailored blank 1 according to the first embodiment. Therefore, in the tailored blank 1 according to the first embodiment, the average Al concentration of the weld metal 13 is defined.

(Sheet Thicknesses of First Steel Sheet 11 and Second Steel Sheet 12)

A sheet thickness h1 of the first steel sheet 11 and a sheet thickness h2 of the second steel sheet 12 satisfy the following Formula 1.

$$h2/h1 \geq 1.1 \ldots \text{(Formula 1)}$$

Formula 1 defines a relationship between the first steel sheet 11 and the sheet thickness. The first steel sheet 11 is thinner than the second steel sheet 12. Therefore, as shown in FIG. 1, on at least one of the surfaces (surface A SA and surface B SB) of the tailored blank 1, a surface of the first steel sheet 11 is recessed with respect to a surface of the second steel sheet 12, and a step difference is generated. By satisfying Formula 1, a degree of freedom in design is improved, but stress concentration is likely to occur. Even though, in the tailored blank 1 according to the first embodiment, since the Al concentration of the weld metal 13 is appropriately controlled and a base exposed portion 15 is appropriately provided, fracture of the weld metal 13 can be prevented.

When the steel sheet is a plated steel sheet, a sheet thickness of the steel sheet includes a thickness of a plated layer. Meanwhile, when the steel sheet is a coated steel sheet, the sheet thickness of the steel sheet does not include a thickness of a coating film. Generally, a tailored blank is not coated, but a press-formed article manufactured from the tailored blank may be coated. The sheet thickness of the steel sheet is a value specified in the vicinity of the weld metal 13, and a specific measurement method thereof will be described later. When the first steel sheet 11 and the second steel sheet 12 are made of the same steel sheet, Formula 1 is not satisfied.

(Carbon Concentrations of First Steel Sheet 11 and Second Steel Sheet 12)

The sheet thickness h1 and a carbon concentration C1 of the first steel sheet 11 and the sheet thickness h2 and a carbon concentration C2 of the second steel sheet 12 satisfy the following Formula 2.

$$h1 \times C1 \leq h2 \times C2 \ldots \text{(Formula 2)}$$

A carbon concentration of the steel sheet is an index of strength of the steel sheet after quenching. The higher the carbon concentration of the steel sheet, the greater the tensile strength of the steel sheet after quenching. In the tailored blank 1 according to the first embodiment, a product of the carbon concentration and the sheet thickness of the steel sheet is used as an index of rigidity of the steel sheet after quenching. Formula 2 defines a relationship between rigidity of the first steel sheet 11 and the second steel sheet 12 after quenching. After the tailored blank 1 satisfying Formula 2 is quenched, the rigidity of the first steel sheet 11 is substantially the same as or smaller than that of the second steel sheet 12. The carbon concentration C1 of the first steel sheet 11 may be equal to the carbon concentration C2 of the second steel sheet 12. The carbon concentration C1 of the first steel sheet 11 is preferably different from the carbon concentration C2 of the second steel sheet 12. The carbon concentration C1 is preferably 1.5 times the carbon concentration C2 or less. The carbon concentration C1 is further preferably 1.3 times the carbon concentration C2 or less. The carbon concentration C1 is particularly preferably 1.1 times the carbon concentration C2 or less. The carbon concentration C1 is preferably 0.5 times the carbon concentration C2 or more. The carbon concentration C1 is further preferably 0.7 times the carbon concentration C2 or more. The carbon concentration C1 is particularly preferably 0.9 times the carbon concentration C2 or more. When the carbon concentration C1 of the first steel sheet 11 is smaller than the carbon concentration C2 of the second steel sheet 12, the rigidity of the second steel sheet 12 does not become lower than the rigidity of the first steel sheet 11, and both the strength and the corrosion resistance of the weld metal are more likely to be ensured.

(Step Difference Formed by First Steel Sheet 11 and Second Steel Sheet 12)

In the tailored blank 1 formed of two steel sheets having different sheet thicknesses, as shown in FIG. 1 and the like, a step difference is formed on at least one surface. In the tailored blank 1 according to the first embodiment, a step difference formed on one surface is 1.1 times a step difference formed on the other surface or more.

Hereinafter, for convenience of description, one surface of the tailored blank 1 is referred to as a surface A SA of the tailored blank 1, and the other surface is referred to as a surface B SB of the tailored blank 1. As shown in FIG. 1 and the like, a surface of the first steel sheet 11 on the surface A SA side of the tailored blank 1 is referred to as a surface A S1A of the first steel sheet 11, a surface of the second steel sheet 12 on the surface A SA side of the tailored blank 1 is referred to as a surface A S2A of the second steel sheet 12, a surface of the first steel sheet 11 on the surface B SB side of the tailored blank 1 is referred to as a surface B S1B of the first steel sheet 11, and a surface of the second steel sheet 12 on the surface B SB side of the tailored blank 1 is referred to as a surface B S2B of the second steel sheet 12. A step difference formed by the surface A S1A of the first steel sheet 11 and the surface A S2A of the second steel sheet 12 is referred to as LDa, and a step difference formed by the surface B S1B of the first steel sheet 11 and the surface B S2B of the second steel sheet 12 is referred to as LDb.

The step difference LDa between the surface A S1A of the first steel sheet 11 and the surface A S2A of the second steel sheet 12 and the step difference LDb between the surface B S1B of the first steel sheet 11 and the surface B S2B of the second steel sheet 12 satisfy the following Formula 3.

$$LDb \geq 1.1 \times LDa \ldots \text{(Formula 3)}$$

As shown in FIG. 1 and the like, by satisfying Formula 3, step differences can be formed on both the surface A SA of the tailored blank 1 and the surface B SB of the tailored blank 1. In any of the step differences, the toe portion 131 as a boundary portion between the surface of the first steel sheet 11 having a thin sheet thickness and the surface of the weld metal 13 can be a stress concentration portion. That is, when Formula 3 is satisfied, stress concentration is likely to occur. In the tailored blank 1 according to the first embodiment, the step difference LDb on the surface B SB side of the tailored blank is larger than the step difference LDa on the surface A SA side of the tailored blank 1. Therefore, in the weld of the tailored blank 1 according to the first embodiment, the boundary portion between the surface B S1B of the first steel sheet and the surface of the weld metal 13 is a region where stress is most likely to concentrate.

As long as the above Formula 3 is satisfied, a positional relationship between the surface A S1A of the first steel sheet and the surface A S2A of the second steel sheet is not limited. The surface A S1A of the first steel sheet and the surface A S2A of the second steel sheet may be on substantially the same plane. That is, the surface A SA of the tailored blank 1 may have no step difference. The surface A S2A of the second steel sheet may be recessed toward the surface A SA of the tailored blank 1 more than the surface A S1A of the first steel sheet. That is, when a direction from the surface A S2A to the surface B S2B of the second steel sheet 12 along the thickness direction of the second steel sheet 12 is defined as a +Z direction (upward direction) with reference to the surface B SB of the tailored blank, the surface A S2A of the second steel sheet may be higher than the surface A S1A of the first steel sheet. In any case, as long as the above Formulas 1 to 3 are satisfied, the boundary portion between the surface B S1B of the first steel sheet and the surface of the weld metal 13 is a region where the stress is most likely to concentrate. However, the step difference LDa on the surface A SA side of the tailored blank 1 is preferably within 20% of the sheet thickness h1 of the first steel sheet 11. When the step difference LDa on the surface A SA side of the tailored blank 1 is within 20% of the sheet thickness h1 of the first steel sheet 11, the strength of the tailored blank 1 is further enhanced. The step difference LDa is more preferably 15% or less, or 10% or less. When the surface A SA of the tailored blank 1 has a step difference, the surface A S1A of the first steel sheet is preferably recessed toward the surface A SA of the tailored blank 1 more than the surface A S2A of the second steel sheet. As compared with the case where the surface A S2A of the second steel sheet is recessed toward the surface A SA of the tailored blank 1 more than the surface A S1A of the first steel sheet, a butt area between the first steel sheet 11 and the second steel sheet 12 before manufacturing the tailored blank 1 is increased, and strength of the tailored blank 1 is more enhanced. The step difference LDa on the surface A SA side of the tailored blank 1 may be more than 0 mm.

The sheet thickness h2 of the second steel sheet and the step difference LDa of the surface A S2A of the second steel sheet 12 may satisfy the following Formula 9. By satisfying the following Formula 9, fracture of the tailored blank 1 is more likely to be prevented.

$$LDa \leq 0.125 \times h2 \ldots \text{(Formula 9)}$$

(Aluminum-Based Plated Layer 14)

The first steel sheet 11 includes an aluminum-based plated layer 14 on at least the surface A S1A of the first steel sheet. In the present specification, regarding the aluminum-based plated layer 14, when a region in which the content of aluminum is 50% or more in mass% with respect to the total mass of the plated layer is present, it is determined that the aluminum-based plated layer 14 is present. The presence of the aluminum-based plated layer 14 is determined by measuring the content of aluminum by line analysis using an electron beam microanalyzer to be described later. The aluminum-based plated layer 14 may be a plated layer made of Al and impurities. Meanwhile, the aluminum-based plated layer 14 may contain an alloy component such as Si. Hereinafter, for convenience of description, a surface layer 142 and an intermetallic compound layer 141 will be described separately. Whether FexAly or FexAlySiz is contained in the intermetallic compound layer is determined by line analysis using an electron probe microanalyzer to be described later. Specifically, a layer containing a compound represented by $Fe_xAl_y$ or $Fe_xAl_ySi_z$ (x, y, and z represent numbers of 1 or more) is described as the intermetallic compound layer 141, and a layer not containing a compound represented by $Fe_xAl_y$ or $Fe_xAl_ySi_z$ (x, y, and z represent numbers of 1 or more) is described as the surface layer 142, and in the present specification, the aluminum-based plated layer 14 is a concept including the intermetallic compound layer 141, and the intermetallic compound layer 141 is one type of the aluminum-based plated layer 14.

The intermetallic compound layer 141 may be formed at an interface between the aluminum-based plated layer 14 and a steel sheet serving as a plating base metal (base steel sheet). The intermetallic compound layer 141 is a layer formed by mutual diffusion of a component of the base steel sheet and a component of the aluminum-based plated layer 14. Generally, when the aluminum-based plated layer 14 is electro plating, the intermetallic compound layer 141 is not formed. Meanwhile, when the aluminum-based plated layer 14 is formed by molten aluminum-based plating, the intermetallic compound layer 141 may be formed. Note that a thickness of the intermetallic compound layer 141 can be controlled by a temperature and an immersion time of a molten metal bath mainly containing aluminum. The intermetallic compound layer 141 can also be formed by heating a steel sheet including the aluminum-based plated layer 14. Here, the thickness of the intermetallic compound layer 141 can be controlled by a heating temperature and a heating time of the steel sheet. Therefore, in the tailored blank 1 according to the first embodiment, when the intermetallic compound layer 141 is formed, a part or all of the aluminum-based plated layer 14 becomes the metal sheet compound 141. When the intermetallic compound layer 141 is a part of the aluminum-based plated layer 14, a part other than the intermetallic compound layer 141 in the aluminum-based plated layer 14 is referred to as the surface layer 142.

The aluminum-based plated layer 14 disposed on the surface A S1A of the first steel sheet is in contact with the weld metal 13. As a result, corrosion resistance of the weld metal 13 and the surface A S1A of the first steel sheet is enhanced. The toe portion 131 having such a configuration is obtained, for example, by butt-welding the first steel sheet 11 and the second steel sheet 12 while the aluminum-based plated layer 14 is disposed at the end portion of the surface A S1A of the first steel sheet. Since the aluminum component is supplied from the aluminum-based plated layer 14 at the end portion of the surface A S1A of the first steel sheet, the corrosion resistance of the weld metal 13 is stabilized. Meanwhile, at the toe portion 131 having such a configuration, the Al component of the aluminum-based plated layer 14 is enriched.

As shown in the example of FIG. 1, the surface layer 142 of the aluminum-based plated layer 14 disposed on the surface A S1A of the first steel sheet may be removed in the vicinity of the weld metal 13. For example, when the intermetallic compound layer 141 is present, a part other than the intermetallic compound layer 141 may be removed on the surface A S1A of the first steel sheet, and the intermetallic compound layer 141 may be exposed. When the intermetallic compound layer 141 remains, the aluminum component is supplied from the intermetallic compound layer 141 to the weld metal 13. When exposure of the base steel sheet is avoided, an effect of improving corrosion resistance of the surface A S1A of the first steel sheet is ensured. Therefore, a configuration in which only the intermetallic compound layer 141 is in contact with the weld metal 13 is also allowed in the tailored blank 1 according to the first embodiment. Meanwhile, the aluminum-based plated layer 14 may not be removed at all on the surface A S1A of the first steel sheet.

(Base Exposed Portion 15)

The first steel sheet 11 includes a base exposed portion 15 on the surface B S1B of the first steel sheet 11. The base exposed portion 15 indicates a part where the aluminum-based plated layer 14 is not disposed and the base steel sheet is exposed to the outside of the plated layer. In the example of the tailored blank 1 shown in FIG. 1, the aluminum-based plated layer 14 is disposed on the surface B S1B of the first steel sheet 11, and the base exposed portion 15 is disposed between the aluminum-based plated layer 14 and the weld metal 13. The base exposed portion 15 is exposed to the outside of the aluminum-based plated layer 14.

Note that it is not necessary to dispose a plated layer on the surface B S1B of the first steel sheet 11. When the first steel sheet 11 is a plated steel sheet in which a plated layer is disposed only on the surface A S1A of the first steel sheet 11 (so-called one-sided plated steel sheet), the entire surface B S1B of the first steel sheet 11 is regarded as the base exposed portion 15.

Coating other than the plated layer may be disposed on the base exposed portion 15.

For example, a coating film may be provided on the base exposed portion 15. Generally, the tailored blank 1 is not coated, but a press-formed article manufactured from the tailored blank 1 may be coated.

The base exposed portion 15 on the surface B S1B of the first steel sheet 11 is in contact with the weld metal 13. The base exposed portion 15 is obtained, for example, by butt-welding the first steel sheet 11 and the second steel sheet 12 while the aluminum-based plated layer 14 is not disposed on the surface B S1B of the first steel sheet 11. Alternatively, the base exposed portion 15 is also obtained by first disposing the aluminum-based plated layer 14 over the entire surface B S1B of the first steel sheet 11, and then butt-welding the first steel sheet 11 and the second steel sheet 12 while the plated layer at the end portion of the surface B S1B of the first steel sheet 11 is removed by grinding, cutting, laser ablation, or the like. The enrichment of Al due to the aluminum-based plated layer 14 does not occur at the toe portion 131 facing the surface B S1B of the first steel sheet 11 having such a configuration.

(Operation and Effects)

The present inventors have found that cracks of a weld metal are likely to occur in a tailored blank manufactured from two steel sheets having different sheet thicknesses.

The present inventors estimated that the cracks of the weld metal 13 is stress concentration at the toe portion 131 on the thin plate side of the weld metal 13. The tailored blank 1 obtained by butt-welding two steel sheets having different sheet thicknesses has a step difference on at least one surface. On the surface where a large step difference is formed, the toe portion 131 on the thin sheet side of the weld metal 13 has a concave shape in which stress concentration is likely to occur. When rigidity of the thick sheet is higher than that of the thin sheet, stress concentration at the toe portion 131 on the thin sheet side becomes more severe.

In the weld metal 13 of the tailored blank 1 according to the first embodiment, a location where stress is most likely to be concentrated is the toe portion 131 facing the surface B S1B of the first steel sheet. It is because the sheet thickness h1 of the first steel sheet is smaller than the sheet thickness h2 of the second steel sheet, the surface B S1B of the first steel sheet is recessed toward the surface A SA of the tailored blank more than the surface B S2B of the second steel sheet, and the step difference LDb on the surface B is larger than the step difference LDa on the surface A.

In the tailored blank 1 according to the first embodiment, the index h2 × C2 indicating rigidity of the second steel sheet 12 is higher than the index h1 × C1 indicating rigidity of the first steel sheet 11. When a bending stress is applied to an article obtained by quenching the tailored blank 1 satisfying the relationship of $h1 \times C1 \leq h2 \times C2$, a deformation amount of the second steel sheet 12 is smaller than that of the first steel sheet 11. As a result, deformation caused by bending stress in the tailored blank 1 after quenching concentrates on the first steel sheet 11.

Therefore, in the tailored blank 1 according to the first embodiment, fracture of the weld metal 13 is prevented by the base exposed portion 15 provided on the surface B S1B of the first steel sheet 11. By providing the base exposed portion 15, it is possible to avoid the enrichment of Al due to aluminum-based plating at the toe portion 131 facing the surface B S1B of the first steel sheet 11.

In the tailored blank 1 according to the first embodiment, the average Al concentration of the weld metal 13 is in the range of 0.05 to 1.00 mass%. As a result, the weld metal 13 has high corrosion resistance overall and is hardly fractured.

Stress concentration hardly occurs at the toe portion 131 facing the surface A S1A of the first steel sheet and the toe portions 131 facing the surface A S2A and the surface B S2B of the second steel sheet. In the toe portions 131, the enrichment of Al is allowed. Therefore, the aluminum-based plated layer 14 is disposed to be in contact with the weld metal 13 at least at the toe portion 131 facing the surface A S1A of the first steel sheet. The aluminum-based plated layer 14 on the surface A S1A of the first steel sheet enhances the corrosion resistance of the surface A S1A of the first steel sheet. The aluminum-based plated layer 14 provided at the portion to be welded on the surface A S1A of the first steel sheet increases the aluminum concentration of the weld metal 13 on the surface A SA side of the tailored blank to stabilize corrosion resistance of the weld metal 13.

The most basic aspect of the tailored blank 1 according to the first embodiment has been described above. Next, a preferable aspect of the tailored blank 1 according to the first embodiment will be described.

(Plated Layer of Second Steel Sheet 12)

The second steel sheet 12 may be a non-plated steel sheet. Meanwhile, as exemplified in FIG. 1, the second steel sheet 12 may be a zinc-based plated steel sheet. Here, the zinc-based plated steel sheet refers to a steel sheet including a base steel sheet and a zinc-based plated layer provided on the base steel sheet. The zinc-based plated layer refers to a plated layer in which the content of zinc is 50% or more in mass% with respect to the total mass of the plated layer. Similarly to the first steel sheet 11, the second steel sheet 12 may be an aluminum-based plated steel sheet. That is, the aluminum-based plated layer 14 or a zinc-based plated layer 16 may be provided on one or both of the surface A S2A of the second steel sheet 12 and the surface B S2B of the second steel sheet 12. The example of FIG. 1 is an example in which the zinc-based plated layer 16 is provided on both surfaces of the second steel sheet 12. The plated layer enhances corrosion resistance of the second steel sheet 12. The plated layer can reduce an amount of scale generated by hot-stamping the second steel sheet 12. Plating other than those exemplified here may be provided on the surface of the second steel sheet 12.

Since the zinc-based plated layer 16 is evaporated by welding heat, the zinc-based plated layer 16 does not affect the components of the weld metal 13, but the aluminum concentration of the weld metal 13 on the surface A SA side of the tailored blank can be increased by the aluminum-based plated layer 14 provided at the portion to be welded on the surface A S1A of the first steel sheet, and the corrosion resistance of the weld metal 13 can be stabilized. Meanwhile, since the aluminum-based plated layer 14 is melted by welding heat and melts into a molten pool, the aluminum-based plated layer 14 may affect the components of the weld metal 13. However, the aluminum-based plated layer 14 provided on the surface A S2A of the second steel sheet 12 and the surface B S2B of the second steel sheet 12 does not impair joining strength of the weld metal 13 as long as the average Al concentration of the weld metal 13 is within the range of 0.05 to 1.00 mass%. It is because, in the tailored blank 1 according to the first embodiment, shapes of the members are defined such that stress is not concentrated at the toe portions 131 facing the surface A S2A of the second steel sheet 12 and the surface B S2B of the second steel sheet 12.

The ratio between the sheet thickness h1 of the first steel sheet and the sheet thickness h2 of the second steel sheet can be appropriately selected within a range satisfying the above Formula 1. For example, the sheet thickness h1 of the first steel sheet and the sheet thickness h2 of the second steel sheet may satisfy the following Formula 4.

$$h2/h1 \geq 1.5 \ldots \text{(Formula 4)}$$

As h2/h1 increases, the step difference on the surface of the tailored blank 1 increases, and stress concentration becomes significant. That is, when Formula 4 is satisfied, stress concentration does not become likely to occur. However, in the tailored blank 1 according to the first embodiment, the Al concentration of the weld metal 13 is appropriately controlled and the base exposed portion 15 is appropriately provided. Therefore, even when Formula 4 is satisfied, fracture of the weld metal 13 can be prevented.

h2/h1 may be 1.2 or more, 1.3 or more, 1.4 or more, 1.5 or more, or 1.6 or more. The upper limit value of h2/h1 is not particularly limited, but for example, h2/h1 may be 3.0 or less, 2.5 or less, or 2.0 or less.

(Plated Layer on Surface B S1B of First Steel Sheet 11)

The plated layer may not be disposed on the surface B S1B of the first steel sheet 11.
That is, the first steel sheet 11 may be a one-sided plated steel sheet in which the aluminum-based plated layer 14 is disposed only on the surface A S1A. Alternatively, the aluminum-based plated layer 14 may be disposed on the surface B S1B of the first steel sheet 11. Here, an exposed portion on the surface B S1B of the first steel sheet may be disposed between the aluminum-based plated layer 14 on the surface B S1B of the first steel sheet and the weld metal 13. As a result, the corrosion resistance of the surface B S1B of the first steel sheet is further enhanced.

(Step Difference on Surface A SA of Tailored Blank)

As exemplified in FIG. 1, in the surface A SA of the tailored blank, the surface A S1A of the first steel sheet 11 and the surface A S2A of the second steel sheet 12 may form a step difference. Meanwhile, it is most preferable that there is no step difference on the surface A SA of the tailored blank. That is, it is most preferable that the surface A S1A of the first steel sheet 11 and the surface A S2A of the second steel sheet 12 are on substantially the same plane. Then, it is possible to further reduce stress concentration at the toe portion 131 facing the surface A S1A of the first steel sheet 11 and the toe portion 131 facing the surface A S2A of the second steel sheet 12. Accordingly, designability of a joint portion is enhanced. Therefore, when the surface A SA of the tailored blank is a side on which designability is required (for example, outer side of the component), the surface A S1A of the first steel sheet 11 and the surface A S2A of the second steel sheet 12 are preferably on substantially the same plane.

(2. Press-Formed Article)

Next, a press-formed article according to a second embodiment will be described. The press-formed article according to the second embodiment is a machine component obtained by hot-stamping the tailored blank 1 according to the first embodiment. Many of the feature points of the press-formed article according to the second embodiment are common to the feature points of the tailored blank 1 according to the first embodiment except for an index of rigidity of the steel sheet to be described later. Therefore, the matters described with respect to the tailored blank 1 according to the first embodiment also apply to the press-formed article according to the second embodiment in principle. The preferred aspects of the tailored blank 1 can also be applied to the press-formed article.
The press-formed article according to the second embodiment includes a first steel material 21, a second steel material 22 butt-welded to the first steel material 21, and a weld metal 23 connecting an end portion of the first steel material 21 and an end portion of the second steel material 22. Similar to the tailored blank 1 according to the first embodiment, the press-formed article according to the second embodiment is also one type of butt joint. The second steel material 22 may be an aluminum-based plated steel material, a zinc-based plated steel material, or a non-plated steel material.

(Average Al Concentration of Weld Metal 23)

In the press-formed article according to the second embodiment, the average Al concentration of the weld metal 23 is in the range of 0.05 to 1.00 mass%. When the average Al concentration of the weld metal 23 is within the above range, the weld metal 23 has high corrosion resistance and is hardly fractured. The average Al concentration of the weld metal 23 may be 0.08 mass% or more, 0.10 mass% or more, 0.15 mass% or more, or 0.30 mass% or more. The average Al concentration of the weld metal 23 may be 0.90 mass% or less, 0.80 mass% or less, 0.70 mass% or less, or 0.60 mass% or less. The average Al concentration of the weld metal 23 can be measured by the same method as the method for measuring the average Al concentration of the weld metal 13 to be described later.

(Thickness of First Steel Material 21 and Second Steel Material 22)

A thickness H1 of the first steel material 21 and a thickness H2 of the second steel material 22 satisfy the following Formula 5. By satisfying Formula 5, a degree of freedom in design is improved, but stress concentration is likely to occur. Even then, in the press-formed article according to the second embodiment, since the Al concentration of the weld metal 23 is appropriately controlled and the base exposed portion 15 is appropriately provided, fracture of the weld metal 23 can be prevented.

$$H2/H1 \geq 1.1\ldots \text{(Formula 5)}$$

The first steel material 21 is thinner than the second steel material 22. Therefore, similarly to the tailored blank 1 according to the first embodiment, on at least one of surfaces (surface A SA and surface B SB) of the press-formed article according to the second embodiment, a surface of the first steel material 21 is recessed with respect to a surface of the second steel material 22, and a step difference is generated. The thickness H1 of the first steel material 21 and the thickness H2 of the second steel material 22 can be measured by the same method as the method for measuring the sheet thickness h1 of the first steel sheet 11 and the sheet thickness h2 of the second steel sheet to be described later.

(Tensile Strength of First Steel Material 21 and Second Steel Material 22)

In the press-formed article according to the second embodiment, carbon concentrations of the first steel material 21 and the second steel material 22 are not particularly limited. A carbon concentration C1 of the first steel material 21 may be equal to a carbon concentration C2 of the second steel material 22. The carbon concentration C1 of the first steel sheet 11 is preferably different from the carbon concentration C2 of the second steel sheet 12. The carbon concentration C1 is preferably 1.5 times the carbon concentration C2 or less. The carbon concentration C1 is further preferably 1.3 times the carbon concentration C2 or less. The carbon concentration C1 is particularly preferably 1.1 times the carbon concentration C2 or less. The carbon concentration C1 is preferably 0.5 times the carbon concentration C2 or more. The carbon concentration C1 is further preferably 0.7 times the carbon concentration C2 or more. The carbon concentration C1 is particularly preferably 0.9 times the carbon concentration C2 or more. Meanwhile, in the press-formed article according to the second embodiment, the thickness H1 and a tensile strength T1 of the first steel material 21 and the thickness H2 and a tensile strength T2 of the second steel material 22 satisfy the following Formula 6. The carbon concentration C1 of the first steel material 21 and the carbon concentration C2 of the second steel material 22 can be measured by the same method as the method for measuring chemical components of the first steel sheet 11 and the second steel sheet 12 to be described later.

$$H1 \times T1 \leq H2 \times T2\ldots \text{(Formula 6)}$$

In the press-formed article according to the second embodiment, a product of the tensile strength and the thickness of the steel material is used as an index of rigidity of the steel material. Formula 6 defines a relationship in rigidity between the first steel material 21 and the second steel material 22. In the press-formed article satisfying Formula 6, the rigidity of the first steel material 21 is substantially the same as or smaller than that of the second steel material 22. The product of the tensile strength T1 and the thickness H1 of the first steel material 21 is preferably smaller than the product of the tensile strength T2 and the thickness H2 of the second steel material 22.

(Method for Measuring Tensile Strength of First Steel Material 21 and Second Steel Material 22)

The tensile strength of the first steel material 21 and the second steel material 22 is evaluated according to JIS Z 2241:2011 "Metallic material tensile test method".

(Step Difference Formed by First Steel Material 21 and Second Steel Material 22)

In the press-formed article according to the second embodiment, similar to the tailored blank 1 according to the first embodiment, the step difference formed on one surface is 1.1 times the step difference formed on the other surface or more. That is, a step difference LD2a between the surface A of the first steel material 21 and the surface A of the second steel material 22 and a step difference LD2b between the surface B of the first steel material 21 and the surface B of the second steel material 22 satisfy the following Formula 7. When Formula 7 is satisfied, stress concentration is likely to occur in the weld of the press-formed article. The step difference LD2a and the step difference LD2b can be measured by the same method as the method for measuring the step difference LDa between the surface A of the first steel material and the surface A of the second steel material and the step difference LDb between the surface B of the first steel material and the surface B of the second steel material to be described later.

$$LD2b \geq 1.1 \times LD2a\ldots \text{(Formula 7)}$$

Therefore, in the press-formed article according to the second embodiment, similar to the tailored blank 1 according to the first embodiment, as long as the above Formulas 5 to 7 are satisfied, the boundary portion between a surface B S3B of the first steel material and the surface of the weld metal 23 is a region where the stress is most likely to concentrate in the weld.

(Aluminum-Based Plated Layer 24)

In the press-formed article according to the second embodiment, similar to the tailored blank 1 according to the first embodiment, the first steel material 21 includes an aluminum-based plated layer 24 on at least a surface A S3A of the first steel material. In the aluminum-based plated layer 24, the entire aluminum-based plated layer 24 is the intermetallic compound layer 141. The aluminum-based plated layer 24 disposed on the surface A S3A of the first steel material is in contact with the weld metal 23.

(Base Exposed Portion 15)

In the press-formed article according to the second embodiment, similar to the tailored blank 1 according to the first embodiment, the first steel material 21 includes a base exposed portion 15 on the surface B S3B of the first steel material 21. The base exposed portion 15 is exposed to the outside of the aluminum-based plated layer 24. Note that coating other than the plated layer may be disposed on the base exposed portion 15. For example, the base exposed portion 15 may be coated. The base exposed portion 15 on the surface B S3B of the first steel material 21 is in contact with the weld metal 23.

(Operation and Effects)

In the press-formed article according to the second embodiment, a location where stress is most likely to be concentrated is a toe portion 231 facing the surface B S3B of the first steel material. Therefore, in the press-formed article according to the second embodiment, fracture of the weld metal 23 is prevented by the base exposed portion 15 provided on the surface B S3B of the first steel material 21. By providing the base exposed portion 15, it is possible to avoid the enrichment of Al due to aluminum-based plating at the toe portion 231 facing the surface B S3B of the first steel material 21.

In the press-formed article according to the second embodiment, the average Al concentration of the weld metal 23 is in the range of 0.05 to 1.00 mass%. As a result, the weld metal 23 has high corrosion resistance and is hardly fractured.

In the press-formed article according to the second embodiment, the aluminum-based plated layer 24 is disposed to be in contact with the weld metal 23 at least at the toe portion 231 facing the surface A S3A of the first steel material. The aluminum-based plated layer 24 on the surface A S3A of the first steel material enhances the corrosion resistance of the surface A S3A of the first steel material. The aluminum-based plated layer 24 provided at the portion to be welded on the surface A S3A of the first steel material increases the overall aluminum concentration of the weld metal 23 on the surface A SA side of the press-formed article and stabilizes corrosion resistance of the weld metal 23.

The most basic aspect of the press-formed article according to the second embodiment has been described above. Next, a preferable aspect of the press-formed article according to the second embodiment will be described.

(Plated Layer of Second Steel Material 22)

The second steel material 22 may be a non-plated steel material. The second steel material 22 is preferably, for example, an aluminum-based plated steel material or a zinc-based plated steel material. That is, the aluminum-based plated layer 24 or a zinc-based plated layer 26 is preferably provided on one or both of a surface A S4A of the second steel material 22 and the surface B S2B of the second steel material 22. The plated layer enhances corrosion resistance of the second steel material 22. The plated layer can reduce an amount of scale generated by hot-stamping the second steel material 22. Plating other than those exemplified here may be provided on the surface of the second steel material 22.

A ratio between the thickness H1 of the first steel material and the thickness H2 of the second steel material can be appropriately selected within a range satisfying the above Formula 1. For example, the thickness H1 of the first steel material and the thickness H2 of the second steel material may satisfy the following Formula 8.

$$H2/H1 \geq 1.5 \ldots \text{(Formula 8)}$$

As H2/H1 increases, that is, when Formula 8 is satisfied, the step difference on the surface of the press-formed article becomes larger, and stress concentration becomes significant. However, in the press-formed article according to the first embodiment, the Al concentration of the weld metal 23 is appropriately controlled and the base exposed portion 15 is appropriately provided. Therefore, even when H2/H1 is large, fracture of the weld metal 23 can be prevented.

H2/H1 may be 1.2 or more, 1.3 or more, 1.4 or more, 1.5 or more, or 1.6 or more. The upper limit value of H2/H1 is not particularly limited, but for example, H2/H1 may be 3.0 or less, 2.5 or less, or 2.0 or less.

(Plated Layer on Surface B S3B of First Steel Material 21)

The plated layer is not limited to being disposed on the surface B S3B of the first steel material 21. That is, the first steel material 21 may be a one-sided plated steel material in which the aluminum-based plated layer 24 is disposed only on the surface A S3A of the first steel material 21. Alternatively, the aluminum-based plated layer 24 may be disposed on the surface B S3B of the first steel material 21. Here, an exposed portion on the surface B S3B of the first steel material may be disposed between the aluminum-based plated layer 24 on the surface B S3B of the first steel material and the weld metal 23. As a result, the corrosion resistance of the surface B S3B of the first steel material is further enhanced.

(Step Difference on Surface A SA of Press-Formed Article)

In the surface A SA of the press-formed article, the surface A S3A of the first steel material 21 and the surface A S4A of the second steel material 22 may form a step difference. Meanwhile, it is most preferable that there is no step difference on the surface A SA of the press-formed article. That is, it is most preferable that the surface A S3A of the first steel material 21 and the surface A S4A of the second steel material 22 are on substantially the same plane. Then, it is possible to further reduce stress concentration at the toe portion 231 facing the surface A S3A of the first steel material 21 and the toe portion 231 facing the surface A S4A of the second steel material 22. When the surface A SA of the tailored blank is a side on which designability is required (for example, outer side of the component), the surface A S3A of the first steel material 21 and the surface A S4A of the second steel material 22 are preferably on substantially the same plane. The step difference LD2a on the surface A SA side of the press-formed article may be more than 0 mm.

(3. Method for Manufacturing Tailored Blank 1)

Next, a method for manufacturing the tailored blank 1 according to a third embodiment will be described. Many of the feature points of the method for manufacturing the tailored blank 1 according to the third embodiment are common to the feature points of the tailored blank 1 according to the first embodiment. Therefore, the matters described with respect to the tailored blank 1 according to the first embodiment also apply to the method for manufacturing the tailored blank 1 according to the third embodiment in principle. The preferred aspects of the tailored blank 1 can also be applied to the manufacturing method thereof.

The method for manufacturing the tailored blank 1 according to the third embodiment includes a step of butt-welding the first steel sheet 11 and the second steel sheet 12 to form the weld metal 13 connecting the end portion of the first steel sheet 11 and the end portion of the second steel sheet 12. The butt welding is, for example, arc welding, laser welding, or the like. A filler metal may be added to the weld to manufacture the weld metal 13. The filler metal is, for example, a filler wire such as a solid wire or a flux-cored wire.

(Average Al Concentration of Weld Metal 13)

In the method for manufacturing the tailored blank 1 according to the third embodiment, the average Al concentration of the weld metal 13 is set to 0.05 to 1.00 mass%. When the average Al concentration of the weld metal 13 is within the above range, the weld metal 13 has high corrosion resistance and is hardly fractured. The average Al concentration of the weld metal 13 may be 0.08 mass% or more, 0.10 mass% or more, 0.15 mass% or more, or 0.30 mass% or more. The average Al concentration of the weld metal 13 may be 0.90 mass% or less, 0.80 mass% or less, 0.70 mass% or less, or 0.60 mass% or less.

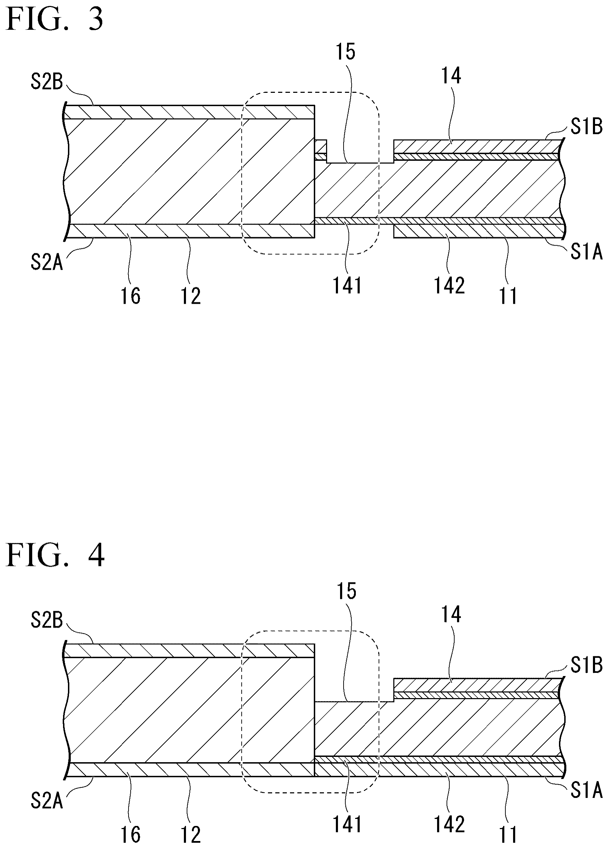

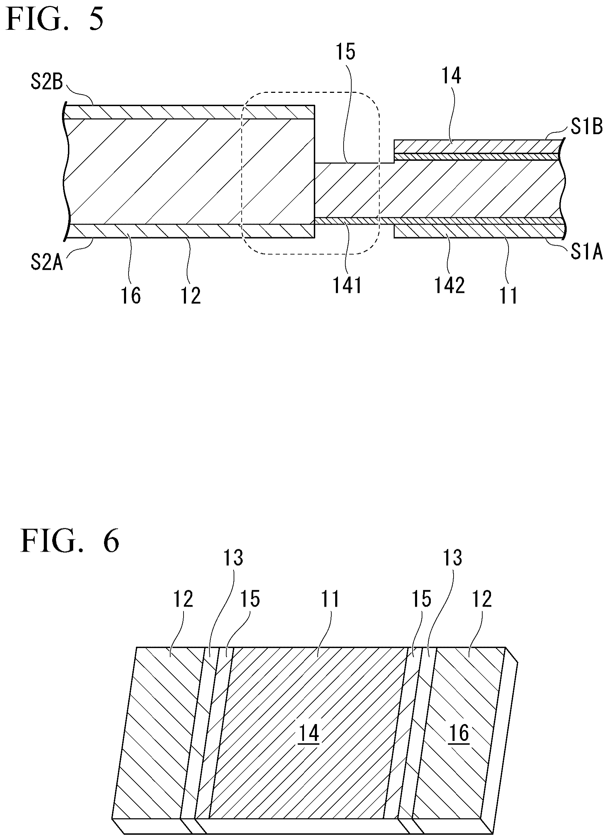

A method for controlling the average Al concentration of the weld metal 13 within the above range is not particularly limited. In general, components of the weld metal 13 of the plated steel sheet are derived from components of the steel sheet and the plating. When a filler metal is used for butt welding, components of the filler metal also affect the weld metal 13. By using a filler wire having components corresponding to the components of the steel sheet and the plating, the average Al concentration of the weld metal 13 can be controlled. As will be described later, it is also possible to control the average Al concentration of the weld metal 13 by allowing a part of the aluminum-based plating provided on the surface B S1B of the first steel sheet 11 to remain in the portion to be welded (refer to FIGS. 2, 3, and 7) or by shallowly removing the aluminum-based plating provided on the surface A S1A of the first steel sheet 11 (refer to FIGS. 3 and 5).

(Sheet Thicknesses of First Steel Sheet 11 and Second Steel Sheet 12)

(Carbon Concentrations of First Steel Sheet 11 and Second Steel Sheet 12)

The first steel sheet 11 and the second steel sheet 12 are selected such that the sheet thicknesses and the carbon concentrations thereof satisfy the following Formulas 1 and 2.

$$h2/h1 \geq 1.1 \ldots \text{(Formula 1)}$$

$$h1 \times C1 \leq h2 \times C2 \ldots \text{(Formula 2)}$$

In Formula 1, h1 is the sheet thickness h1 of the first steel sheet, h2 is the sheet thickness h2 of the second steel sheet, C1 is the carbon concentration of the first steel sheet 11, and C2 is the carbon concentration of the second steel sheet 12. The carbon concentration C1 of the first steel sheet 11 may be equal to the carbon concentration C2 of the second steel sheet 12. The carbon concentration C1 of the first steel sheet 11 is preferably different from the carbon concentration C2 of the second steel sheet 12. The carbon concentration C1 is preferably 1.5 times the carbon concentration C2 or less. The carbon concentration C1 is further preferably 1.3 times the carbon concentration C2 or less. The carbon concentration C1 is particularly preferably 1.1 times the carbon concentration C2 or less. The carbon concentration C1 is preferably 0.5 times the carbon concentration C2 or more. The carbon concentration C1 is further preferably 0.7 times the carbon concentration C2 or more. The carbon concentration C1 is particularly preferably 0.9 times the carbon concentration C2 or more. Technical significance and operation and effects of Formulas 1 and 2 are as described in the tailored blank 1 according to the first embodiment.

(Step Difference Formed by First Steel Sheet 11 and Second Steel Sheet 12)

In the method for manufacturing the tailored blank 1 according to the third embodiment, the step difference LDa between the surface A of the first steel sheet and the surface A of the second steel sheet and the step difference LDb between the surface B of the first steel sheet and the surface B of the second steel sheet satisfy the following Formula 3.

$$LDb \geq 1.1 \times LDa \ldots \text{(Formula 3)}$$

The positional relationship between the surface B S1B of the first steel sheet and the surface B S2B of the second steel sheet and technical significance of Formula 3 are as described with respect to the tailored blank 1 according to the first embodiment. When the first steel sheet 11 and the second steel sheet 12 are butt-welded, Formula 3 can be satisfied by aligning the steel sheets.

(Aluminum-Based Plated Layer 14)

In the method for manufacturing the tailored blank 1 according to the third embodiment, an aluminum-based plated steel sheet is used as the first steel sheet 11. Thus, the aluminum-based plated layer 14 is disposed on the surface AS 1A of the first steel sheet. When the aluminum-based plated steel sheet is a one-sided plated steel sheet, a surface on which the aluminum-based plated steel sheet is provided is used as the surface A S1A of the first steel sheet.

In the method for manufacturing the tailored blank 1 according to the third embodiment, the aluminum-based plated layer 14 disposed on the surface A S1A of the first steel sheet is brought into contact with the weld metal 13. Therefore, it is preferable not to apply a step of removing the aluminum-based plated layer 14 to the end portion of the surface A S1A of the first steel sheet. By subjecting the first steel sheet 11 to welding while the aluminum-based plated layer 14 remains at the end portion of the surface A S1A of the first steel sheet, the aluminum-based plated layer 14 melts in the weld metal 13, thereby increasing the aluminum concentration of the weld metal 13 and stabilizing the corrosion resistance of the weld metal 13.

Meanwhile, at the end portion of the surface A S1A of the first steel sheet, the surface layer 142 of the aluminum-based plated layer 14 may be removed to an extent that the base steel sheet is not exposed. Then, although the thickness of the aluminum-based plated layer 14 is slightly reduced in the weld, the aluminum-based plated layer 14 can be brought into contact with the weld metal 13. The aluminum-based plated layer 14 may be removed such that the base steel sheet is exposed only in the region included in the portion to be welded at the end portion of the surface A S1A of the first steel sheet. Also here, the aluminum-based plated layer 14 can be brought into contact with the weld metal 13. When it is required to reduce the average Al concentration of the weld metal 13, it is allowed to partially remove the aluminum-based plated layer 14 at the end portion of the surface A S1A of the first steel sheet.

(Base Exposed Portion 15)

In the method for manufacturing the tailored blank 1 according to the third embodiment, the base exposed portion 15 is provided on the surface B S1B of the first steel sheet. Then, the base exposed portion 15 on the surface B S1B of the first steel sheet is brought into contact with the weld metal 13.

When the first steel sheet 11 is a one-sided plated steel sheet, special processing for providing the base exposed portion 15 is unnecessary. A surface without the aluminum-based plated steel sheet may be used as the surface B S1B of the first steel sheet. Here, the aluminum-based plated layer 14 does not melt into the toe portion 131 facing the surface B S1B of the first steel sheet.

When the steel sheet of the first steel sheet 11 is a double-sided plated steel sheet, in the method for manufacturing the tailored blank 1 according to the third embodiment, the aluminum-based plated layer 14 is removed at the portion to be welded on the surface B S1B of the first steel sheet and in the vicinity thereof to expose the base steel sheet. Thus, the aluminum-based plated layer 14 can be disposed on the surface B S1B of the first steel sheet, and the base exposed portion 15 on the surface B S1B of the first steel sheet can be disposed between the aluminum-based plated layer 14 on the surface B S1B of the first steel sheet and the weld metal 13. Also here, the aluminum-based plated layer 14 hardly or not at all melts into the toe portion 131 facing the surface B S1B of the first steel sheet.

(Operation and Effects)

In the method for manufacturing the tailored blank 1 according to the third embodiment, the toe portion 131 facing the surface B S1B of the first steel sheet is set as a region where the stress is most likely to concentrate. The aluminum-based plated layer 14 does not or not at all melts into the toe portion 131 facing the surface B S1B of the first steel sheet. Thus, according to the method for manufacturing the tailored blank 1 according to the third embodiment, the weld metal 13 that is hardly fractured can be obtained.

In the method for manufacturing the tailored blank 1 according to the third embodiment, the average Al concentration of the weld metal 13 is set within a range of 0.05 to 1.00 mass%. As a result, the weld metal 13 has high corrosion resistance and is hardly fractured.

In the method for manufacturing the tailored blank 1 according to the third embodiment, stress concentration is reduced at the toe portion 131 facing the surface A S1A of the first steel sheet and the toe portions 131 facing the surface A S2A of the second steel sheet and the surface B S2B of the second steel sheet. In the toe portions 131, the enrichment of Al is allowed. Therefore, the aluminum-based plated layer 14 is disposed to be in contact with the weld metal 13 at least at the toe portion 131 facing the surface A S1A of the first steel sheet. The aluminum-based plated layer 14 on the surface A S1A of the first steel sheet enhances the corrosion resistance of the surface A S1A of the first steel sheet. The aluminum-based plated layer 14 provided at the portion to be welded on the surface A S1A of the first steel sheet increases the aluminum concentration of the weld metal 13 on the surface A SA side of the tailored blank 1 to stabilize the corrosion resistance of the weld metal 13.

The most basic aspect of the method for manufacturing the tailored blank 1 according to the third embodiment has been described above. Next, a preferable aspect of the method for manufacturing the tailored blank 1 according to the third embodiment will be described.

(Plated Layer on Surface B S1B of First Steel Sheet 11)

As described above, the first steel sheet 11 may be a double-sided plated steel sheet. That is, the aluminum-based plated layer 14 may be disposed on the surface B S1B of the first steel sheet. Here, the method for manufacturing the tailored blank 1 may further include a step of removing the aluminum-based plated layer 14 at the portion to be welded on the surface B S1B of the first steel sheet and in the vicinity thereof to expose the base steel sheet. A method for removing the aluminum-based plated layer 14 is not particularly limited. For example, cutting, grinding, laser ablation, and the like can be adopted as the method for removing the aluminum-based plated layer 14. By forming the base exposed portion 15 at the portion to be welded on the surface B S1B of the first steel sheet and in the vicinity thereof, the base exposed portion 15 on the surface B S1B of the first steel sheet can be disposed between the aluminum-based plated layer 14 on the surface B S1B of the first steel sheet and the weld metal 13. Then, the corrosion resistance of the surface B S1B of the first steel sheet can be further enhanced.

An aspect of removal of the aluminum-based plated layer 14 is not particularly limited, but preferred examples are exemplified in FIGS. 2 to 5 and 7. Hereinafter, the preferred examples will be described. Broken lines drawn in FIGS. 2 to 5 and 7 indicate locations where the weld metal 13 is formed. Insides of the broken lines are the portions to be welded.

(Removal of Plated Layer on Surface B S1B of First Steel Sheet 11)

As shown in FIGS. 4 and 5, the aluminum-based plated layer 14 may be removed over the entire area of the portion to be welded on the surface B S1B of the first steel sheet. Meanwhile, as shown in FIGS. 2, 3, and 7, the aluminum-based plated layer 14 may remain at the tip end portion of the surface B S1B of the first steel sheet in the portion to be welded. Then, since the aluminum-based plated layer 14 is provided only at the tip end portion of the surface B S1B of the first steel sheet, it is possible to prevent the enrichment of Al due to aluminum-based plating at the toe portion 131 facing the surface B S1B of the first steel sheet 11, and it is possible to improve the corrosion resistance thereof.

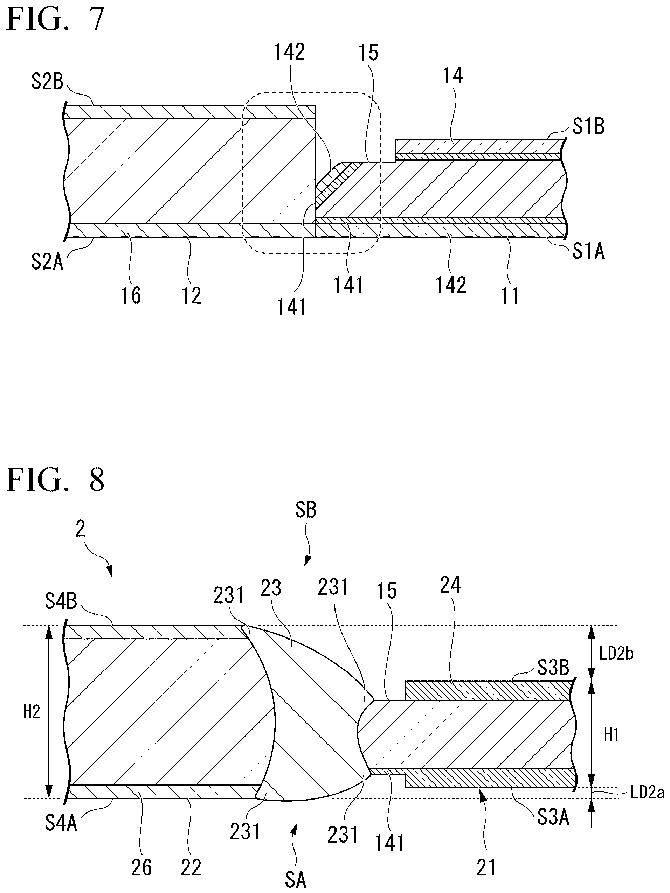

The largest difference between the removal aspect of the plated layer shown in FIGS. 2 and 3 and the removal aspect of the plated layer shown in FIG. 7 is in the position of the plated layer disposed at the tip end portion of the surface B S1B of the first steel sheet. The tip end portion is inside of the portion to be welded. In the cross-sectional views shown in FIGS. 2 and 3, the plated layer at the tip end portion of the surface B S1B of the first steel sheet is on substantially the same plane as the aluminum-based plated layer 14 not included in the portion to be welded. Meanwhile, in the cross-sectional view shown in FIG. 7, the plated layer at the tip end portion of the surface B S1B of the first steel sheet is positioned lower in the drawing with respect to the aluminum-based plated layer 14 not included in the portion to be welded. The difference in the position of the plated layer at the tip end portion is due to the difference in the method for disposing the plated layer at the tip end portion.

Specifically, as shown in FIGS. 2 and 3, the aluminum-based plated layer may remain at the tip end portion of the surface B S1B of the first steel sheet on a side of the aluminum-based plated layer 14 not included in the portion to be welded in a sheet thickness direction relative to an imaginary line extending from an interface between the aluminum-based plated layer 14 not included in the portion to be welded and the steel sheet as a plating base metal (base steel sheet). As shown in FIG. 7, the aluminum-based plated layer may remain at the tip end portion of the surface B S1B of the first steel sheet on the base steel sheet side in the sheet thickness direction relative to the imaginary line extending from the interface between the aluminum-based plated layer 14 not included in the portion to be welded and the base steel sheet.

One method for leaving the aluminum-based plated layer 14 is not to apply a step of exposing the base steel sheet such as cutting to the tip end portion of the surface B S1B of the first steel sheet. The aluminum-based plated layer 14 may remain by utilizing sagging generated when the first steel sheet 11 is manufactured by punching the plated steel sheet. Examples of punching include shearing and blanking. The aluminum-based plated layer 14 remains in the sagging. When the step of removing the aluminum-based plated layer 14 such as cutting is applied to the portion to be welded on the surface B S1B of the first steel sheet without removing the sagging, the aluminum-based plating slightly remains at the tip end portion of the surface B S1B of the first steel sheet. By controlling an amount of sagging, it is also possible to control the amount of aluminum-based plating remaining at the tip end portion of the surface B S1B of the first steel sheet. In the method for leaving the aluminum-based plated layer 14 using sagging at the tip end portion, as shown in FIG. 7, the aluminum-based plated layer 14 remains at the tip end portion of the surface B S1B of the first steel sheet on the base steel sheet side relative to the imaginary line extending from the interface between the aluminum-based plated layer 14 not included in the portion to be welded and the base steel sheet. Here, the thickness of the aluminum-based plated layer 14 remaining at the tip end portion on a side opposite to a butting side is thinner than the thickness on the butting side. The shape of the aluminum-based plated layer 14 remaining at the tip end portion is a peculiar shape when the step of removing the aluminum-based plated layer 14 is applied without removing sagging generated by punching or the like.

(Removal of Aluminum-Based Plated Layer 14 on Surface A S1A of First Steel Sheet 11)

As shown in FIGS. 2, 4, and 7, it is not necessary to remove the aluminum-based plated layer 14 on the surface A S1A of the first steel sheet 11. Meanwhile, as shown in FIGS. 3 and 5, the aluminum-based plated layer 14 on the surface A S1A of the first steel sheet 11 may be removed within a range in which the base steel sheet is not exposed. That is, only the surface layer 142 of the aluminum-based plated layer 14 on the surface A S1A of the first steel sheet 11 may be removed, and the intermetallic compound layer 141 included in the aluminum-based plated layer 14 may remain. The surface layer 142 of the aluminum-based plated layer 14 may be shallowly removed on the surface A S1A of the first steel sheet 11 within a range in which the intermetallic compound layer 141 is not exposed.

In Aspect Example 1 of removing the aluminum-based plated layer 14 shown in FIG. 2, the aluminum-based plated layer 14 on the surface B S1B of the first steel sheet 11 is removed except for the tip end portion thereof. Specifically, the aluminum-based plating remains only at the tip end portion of an imaginary line extending from the interface between the aluminum-based plated layer 14 or the intermetallic compound layer 141 not included in the portion to be welded and a steel sheet serving as a plating base metal (base steel sheet), or on the side of the aluminum-based plated layer 14 not included in the portion to be welded relative to the imaginary line. The aluminum-based plated layer 14 on the surface A S1A of the first steel sheet 11 is not removed at all. The average Al concentration of the weld metal 13 obtained by welding in Aspect Example 1 is higher than that in other examples. According to Aspect Example 1, a time required for removing the aluminum-based plated layer 14 and the removal amount are small.

In Aspect Example 2 of removing the aluminum-based plated layer 14 shown in FIG. 3, the aluminum-based plated layer 14 on the surface B S1B of the first steel sheet 11 is removed except for the tip end portion thereof. Specifically, the aluminum-based plating remains only at the tip end portion of an imaginary line extending from the interface between the aluminum-based plated layer 14 or the intermetallic compound layer 141 not included in the portion to be welded and a steel sheet serving as a plating base metal (base steel sheet), or on the side of the aluminum-based plated layer 14 not included in the portion to be welded relative to the imaginary line. Although the surface layer 142 of the aluminum-based plated layer 14 on the surface A S1A of the first steel sheet 11 is removed, the intermetallic compound layer 141 remains.

In Aspect Example 3 of removing the aluminum-based plated layer 14 shown in FIG. 4, the aluminum-based plated layer 14 on the surface B S1B of the first steel sheet 11 is removed over the entire area of the portion to be welded. The aluminum-based plated layer 14 on the surface A S1A of the first steel sheet 11 is not removed at all. Aspect Example 3 can be easily manufactured from an aluminum-based plated steel sheet in which no sagging remains on the end surface. The aluminum-based plated steel sheet in which no sagging remains on the end surface can be prepared, for example, by cutting the aluminum-based plated steel sheet by laser processing.

In Aspect Example 4 of removing the aluminum-based plated layer 14 shown in FIG. 5, the aluminum-based plated layer 14 on the surface B S1B of the first steel sheet 11 is removed over the entire area of the portion to be welded. Although the surface layer 142 of the aluminum-based plated layer 14 on the surface A S1A of the first steel sheet 11 is removed, the intermetallic compound layer 141 remains. The average Al concentration of the weld metal 13 obtained by welding in Aspect Example 4 is lower than that in other examples. Aspect Example 4 can be easily manufactured from an aluminum-based plated steel sheet in which no sagging remains on the end surface. The aluminum-based plated steel sheet in which no sagging remains on the end surface can be prepared, for example, by cutting the aluminum-based plated steel sheet by laser processing.

In Aspect Example 5 of removing the aluminum-based plated layer 14 shown in FIG. 7, the aluminum-based plated layer 14 on the surface B S1B of the first steel sheet 11 is removed except for the tip end portion thereof. Specifically, the aluminum-based plating remains only at the tip end portion of the base steel sheet side relative to the imaginary line extending from the interface between the aluminum-based plated layer 14 or the intermetallic compound layer 141 not included in the portion to be welded and the base steel sheet. The aluminum-based plated layer 14 on the surface A S1A of the first steel sheet 11 is not removed at all. According to Aspect Example 5, the time required for removing the aluminum-based plated layer 14 is small, and as sagging remains on the end surface in punching of the first steel sheet 11, it is easy to leave the aluminum-based plated layer 14 at the tip end portion of the first steel sheet 11.

(4. Method for Manufacturing Press-Formed Article)

Next, a method for manufacturing a press-formed article according to a fourth embodiment will be described. The press-formed article according to the fourth embodiment includes a step of hot-stamping the tailored blank 1 according to the first embodiment. In hot stamping, the tailored blank 1 is heated to a high temperature and press-formed in a temperature range of Ar3 or more. Also in hot stamping, a press-formed steel sheet is rapidly cooled by removing heat with a die and transformation is caused simultaneously with formation while a press pressure is applied. Hot stamping can manufacture a press-formed article having high strength and excellent shape fixability.

Although the embodiments of the present invention have been described above, the present invention is not limited thereto and can be appropriately modified without departing from the technical idea of the invention.

Hereinafter, more preferred examples of the tailored blank, the press-formed article, the method for manufacturing a tailored blank, and the method for manufacturing a press-formed article according to the present embodiment will be described. More preferred examples described below can be applied to all of the tailored blank, the press-formed article, the method for manufacturing a tailored blank, and the method for manufacturing a press-formed article.

(Number of Steel Sheets)

As shown in FIG. 6, the tailored blank 1 may include three or more steel sheets. In the tailored blank 1 exemplified in FIG. 6, two second steel sheets 12 are butt-welded to both sides of one first steel sheet 11. One of the second steel sheets 12 is a zinc-based plated steel sheet including the zinc-based plated layer 16, and the other of the second steel sheets 12 is a non-plated steel sheet. In each of the two welds, the average Al concentration of the weld metal 13, the sheet thickness, the step difference, the arrangement of the aluminum-based plated layer 14, and the arrangement of the base exposed portion 15 are within predetermined ranges.

However, not all the welds in one tailored blank 1 need to satisfy the above requirements. A tailored blank 1 in which at least one weld satisfies the above requirements is regarded as the tailored blank 1 according to the first embodiment. Also in the method for manufacturing the tailored blank 1 and the press-formed article, three or more steel sheets may be used as described above.

(Width of Base Exposed Portion 15)

The width of the base exposed portion 15 may be more than 0 mm. From the viewpoint of further improving the corrosion resistance of the surface B S1B of the first steel sheet 11, the width of the base exposed portion 15 is preferably as small as possible. However, when the width of the base exposed portion 15 is narrow, it is necessary to improve positioning accuracy of the butt welding. From the viewpoint of facilitating butt welding, it is preferable that the width of the base exposed portion 15 is larger. For example, when butt welding is laser welding, the width of the base exposed portion 15 may be 0.1 mm or more, 0.2 mm or more, or 0.5 mm or more, and the width of the base exposed portion 15 may be 3.0 mm or less, 1.5 mm or less, or 0.5 mm or less. When butt welding is plasma welding, the width of the base exposed portion 15 may be 0.5 mm or more, 1.0 mm or more, or 2.0 mm or more, and the width of the base exposed portion 15 may be 6.0 mm or less, 4.0 mm or less, or 2.0 mm or less. The width of the base exposed portion 15 is the size of the base exposed portion 15 measured in a direction perpendicular to the extending direction of the weld metal 13.

(Plating Removal Boundary)

The plating removal boundary in the base exposed portion 15 is preferably formed by a concave curve represented by a radius of curvature R. The larger the radius of curvature R, the more the stress concentration is relaxed when a stress load is applied. Therefore, the radius of curvature R may be 260 μm or more, 400 μm or more, or 1,000 μm or more. The upper limit of the radius of curvature R is not particularly limited, and may be, for example, 100,000 μm or less.

(Filler Metal)

In the method for manufacturing the tailored blank 1, a filler metal such as a filler wire may be used for butt welding. The filler metal can be used to control the components of the weld metal 13. The filler metal has an effect of reducing the recess of the weld metal 13 and adjusting an external appearance of the weld metal 13. The aluminum concentration of the filler metal is preferably about the same as or less than the aluminum concentration of the first steel sheet 11 and the second steel sheet 12. For example, the aluminum concentration of the filler metal may be within a range of 0.5 to 100% with respect to the average value of the aluminum concentration of the first steel sheet 11 and the second steel sheet 12.

(Arrangement of Surface A SA and Surface B SB in Press-Formed Article)

The press-formed article is obtained by bending a plate. The outer side of the press-formed article is likely to be in a more severe corrosive environment than the inside due to exposure to the use environment of the press-formed article or the like. Here, since the surface A S1A of the first steel sheet does not include the base exposed portion 15, the surface A S1A has higher corrosion resistance than the surface B S1B. Therefore, it is preferable to dispose the surface A S1A of the first steel sheet on the outer side of the press-formed article. Accordingly, corrosion resistance of the press-formed article can be further enhanced.

(Components of Steel Sheet and Plating)

The components of the steel sheet and the plating are not particularly limited, but preferred examples thereof will be given below.

The components of the first steel sheet 11 and the second steel sheet 12 may have a chemical composition containing, for example, in mass%, C: 0.02% to 0.58%, Mn: 0.20% to 3.00%, Al: 0.005% to 0.0600%, P: 0.03% or less, S: 0.010% or less, N: 0.010% or less, Ti: 0% to 0.20%, Nb: 0% to 0.20%, V: 0% to 1.0%, W: 0% to 1.0%, Cr: 0% to 1.0%, Mo: 0% to 1.0%, Cu: 0% to 1.0%, Ni: 0% to 1.0%, B: 0% to 0.0100%, Mg: 0% to 0.05%, Ca: 0% to 0.05%, REM: 0% to 0.05%, Sn: 0% to 0.5%, Bi: 0% to 0.05%, Si: 0% to 2.00%, and remainder: Fe and impurities.

The aluminum-based plated layer 14 includes the surface layer 142, and may further include the intermetallic compound layer 141. Alternatively, the aluminum-based plated layer 14 may include the intermetallic compound layer 141. When the surface layer 142 or the intermetallic compound layer 141 of the plated layer contains 50 mass% of aluminum, the plated layer is regarded as the aluminum-based plated layer 14. According to a purpose, the surface layer 142 of the aluminum-based plated layer 14 may contain an element other than aluminum (for example, Si), and may contain impurities mixed in a manufacturing process or the like. Specifically, the surface layer 142 of the aluminum-based plated layer 14 may have a chemical composition consisting of, for example, in mass%, Si (silicon): 5% to 12%, and remainder: aluminum and impurities. The surface layer 142 of the aluminum-based plated layer 14 may have a chemical composition consisting of, in mass%, Si (silicon): 5% to 12%, Fe (iron): 2% to 4%, and remainder: aluminum and impurities.

When the aluminum-based plated layer 14 is formed by hot-dip plating, the intermetallic compound layer 141 is formed by a reaction between iron (Fe) of the first steel sheet 11 and a metal containing aluminum (Al) in a molten metal bath mainly containing aluminum. The intermetallic compound layer 141 contains a compound represented by $Fe_xAl_y$ (x and y represent a number of 1 or more). When the aluminum-based plated layer 14 contains Si (silicon), the intermetallic compound layer 141 contains compounds represented by $Fe_xAl_y$ and $Fe_xAl_ySi_z$ (x, y, and z each represent 1 or more).

When the aluminum-based plated layer 14 is heated, the intermetallic compound layer 141 is formed. The intermetallic compound layer 141 mainly contains a compound represented by $Fe_xAl_y$ (x and y represent a number of 1 or more). When the aluminum-based plated layer 14 contains Si (silicon), the intermetallic compound layer 141 contains compounds represented by $Fe_xAl_y$ and $Fe_xAl_ySi_z$ (x, y, and z represent numbers of 1 or more), and is changed to a compound having a high Fe concentration by high temperature heating and/or long time heating. The ratio of the intermetallic compound layer 141 to the aluminum-based plated layer 14 changes depending on the degree of heating, and when sufficiently heated, all of the aluminum-based plated layer 14 becomes the intermetallic compound layer 141.

(Thickness of Aluminum-Based Plated Layer)

The thickness of the surface layer 142 of the aluminum-based plated layer is not particularly limited, but for example, may be 8 μm or more, and is preferably 15 μm or more, in terms of an average thickness. The thickness of the surface layer 142 of the aluminum-based plated layer may be, for example, 50 μm or less, and is preferably 40 μm or less, more preferably 35 μm or less, and still more preferably 30 μm or less, in terms of an average thickness. Note that the thickness of surface layer 142 of the aluminum-based plated layer represents the average thickness of the entire one surface of the first steel sheet 11.

The thickness of the intermetallic compound layer 141 of the aluminum-based plated layer is not particularly limited, but for example, may be favorably 1 μm or more, preferably 3 μm or more, and more preferably 4 μm or more, in terms of an average thickness. The thickness of the intermetallic compound layer 141 of the aluminum-based plated layer may be, for example, 10 μm or less, and is preferably 8 μm or less, in terms of an average thickness. Note that the thickness of the intermetallic compound layer 141 of the aluminum-based plated layer represents the average thickness of the first steel sheet 11. Note that the thickness of the intermetallic compound layer 141 of the aluminum-based plated layer can be controlled by a temperature of the molten metal bath mainly containing aluminum and an immersion time.

(Method for Measuring Average Al Concentration of Weld Metal 13)

The method for measuring the average Al concentration of the weld metal 13 is as follows. First, the weld is cut perpendicularly to an extending direction of the weld metal 13 and embedded in resin. The embedded sample is polished, and the weld metal 13 is subjected to mapping analysis by an electron probe microanalyzer (FE-EPMA) to measure the aluminum concentration. The measurement conditions are an acceleration voltage of 15 kV, a beam diameter of about 100 nm, and an irradiation time of 1,000 ms. In the cross section perpendicular to the extending direction of the weld metal 13, the entire area of the range of 300 μm × 300 μm including a center point of the width of the weld metal is measured in a grid pattern at a pitch of 5 μm on a line extending from a half line of the sheet thickness of the steel sheet 11. The average aluminum concentration is obtained by averaging measurement values of the aluminum concentration of the weld metal 13.

(Method For Measuring Sheet Thickness h1 of First Steel Sheet 11 and Sheet Thickness h2 of Second Steel Sheet)

The method for measuring the sheet thickness h1 of the first steel sheet 11 and the sheet thickness h2 of the second steel sheet is as follows. First, the weld is cut perpendicularly to an extending direction of the weld metal 13 and embedded in resin. The embedded sample is polished, and the sheet thickness of the steel sheet in the vicinity of the weld metal 13 is measured with an optical microscope.

(Method for Measuring Chemical Components of First Steel Sheet 11 and Second Steel Sheet 12)

The chemical components of the first steel sheet 11 and the second steel sheet 12 are evaluated according to JIS G 0321:2017 "Method for analyzing steel material product and allowable variation value thereof". In the present specification, the chemical components of the first steel sheet 11 and the second steel sheet 12 are measured after the plated layer is removed. The method for removing the plated layer is not particularly limited.

(Method for Measuring Step Difference)

The method for measuring the step difference LDa between the surface A of the first steel sheet and the surface A of the second steel sheet and the step difference LDb between the surface B of the first steel sheet and the surface B of the second steel sheet is as follows. First, the weld is cut perpendicularly to an extending direction of the weld metal 13 and embedded in resin. The embedded sample is polished, and the weld metal 13 and the vicinity thereof are observed with an optical microscope. As shown in FIG. 1, LDa is specified by measuring an interval between a straight line along the surface A S2A of the second steel sheet and the surface A S1A of the first steel sheet along the sheet thickness direction of the first steel sheet. Similarly, LDb is specified by measuring an interval between a straight line along the surface B S2B of the second steel sheet and the surface B S1B of the first steel sheet 11 along the sheet thickness direction of the first steel sheet. When the first steel sheet 11 and the second steel sheet 12 are bent, a straight line in contact with a sheet surface at an intersection point of the weld metal 13 and the sheet surface may be regarded as a surface of the steel sheet, and the above measurement may be performed.

(Method for Measuring Thickness of Aluminum-Based Plated Layer 14)

The method for measuring the thickness of the aluminum-based plated layer 14 is as follows. First, the weld is cut perpendicularly to an extending direction of the weld metal 13 and embedded in resin. The embedded sample is polished and subjected to line analysis from the surface toward the inside of the first steel sheet 11 by an electron probe microanalyzer (FE-EPMA). Elements to be analyzed in the line analysis are Fe and Al. The measurement conditions are an acceleration voltage of 15 kV, a beam diameter of about 100 nm, and an irradiation time of 1,000 ms. The measurement pitch is a pitch of 5 μm in a grid pattern.

An interface between the surface layer 142 and the intermetallic compound layer 141 and an interface between the intermetallic compound layer 141 and the base steel sheet are specified based on the line analysis result obtained as a result. Specifically, a region where the aluminum concentration is 0.06 mass% or less is regarded as a base steel sheet, and a region where the aluminum concentration is more than 0.06 mass% is determined as the intermetallic compound layer 141 or the surface layer 142.

Examples

The effect of one aspect of the present invention is described more specifically with reference to examples. However, conditions in the examples are merely one condition example adopted to confirm operability and effects of the present invention. The present invention is not limited to one condition example. The present invention can adopt various conditions as long as the object of the present invention is achieved without departing from the gist of the present invention.

A first steel sheet described in Table 1 and a second steel sheet described in Table 2 were laser-welded to prepare a tailored blank. Laser welding conditions were adjusted to perform through-welding within a range of a laser output of 3.0 to 5.0 kW and a welding speed of 4.0 m/min to 7.0 m/min. The welding width was changed as follows according to the sheet thickness of the first steel sheet.

For sheet thickness of 1.4 mm: welding width 1.6 mm
For sheet thickness of 2.0 mm: welding width 2.0 mm
For sheet thickness of 0.8 mm: welding width 1.2 mm

"Tensile strength" described in Tables 1 and 2 is tensile strength of the steel sheet after hot stamping. A measurement method followed the above method for measuring the tensile strength of the first steel sheet 11 and the second steel sheet 12.

"Carbon concentration" described in Tables 1 and 2 is an average carbon concentration of the steel sheet. A measurement method followed the above method for measuring chemical components of the first steel sheet 11 and the second steel sheet 12.

"Sheet thickness" described in Tables 1 and 2 is a sheet thickness of the steel sheet. The sheet thickness was almost the same before and after hot stamping. A measurement method followed the above method for measuring the sheet thickness h1 of the first steel sheet 11 and the sheet thickness h2 of the second steel sheet.

"Plating type" described in Tables 1 and 2 is a type of plating disposed on the surface of the steel sheet. Meanings of symbols described in Tables 1 and 2 are as follows.

· "Al": aluminum-based plated layer
· "GA": zinc-based plated layer (galvannealed layer)
· "Non-plated": no plated layer

"State" described in Tables 1 and 2 is a state of plating disposed on the surface of the steel sheet. Meanings of items described in Tables 1 and 2 are as follows.

· "Entirely left": No removal (plating thickness 30 μm). After laser welding, an aluminum-based plated layer in contact with the weld metal is provided on the surface that is "Entirely left".

· "Partially left": The surface layer of plating is removed over the entire portion to be welded. The thickness of removed plating was 10 μm (remaining plating thickness 20 μm). After laser welding, an aluminum-based plated layer in contact with the weld metal is provided on the surface that is "Partially left".

· "Tip end left": No plating is removed at the tip end portion of the steel sheet in the portion to be welded (plating thickness 30 μm, width of plating remaining region 0.2 mm). In other portions to be welded, the plated layer was completely removed to obtain the base exposed portion. After laser welding, the base exposed portion in contact with the weld metal is provided on the surface that is "Tip end left".

· "Entirely removed": The plated layer was completely removed in the entire region of the portion to be welded to obtain the base exposed portion. After laser welding, the base exposed portion in contact with the weld metal is provided on the surface that is "Entirely removed".

[Table 1]

| | First steel sheet | | | | | | |
|---|---|---|---|---|---|---|---|
| | Tensile strength | Carbon concentration | Sheet thickness | S1A surface | | S1B surface | |
| | T1 | C1 | h1 | Plating type | State | Plating type | State |
| No. | GPa | mass% | mm | - | - | - | - |
| 1 | 1.3 | 0.15 | 1.4 | Al | Entirely left | Al | Entirely removed |
| 2 | 1.3 | 0.15 | 1.4 | Al | Partially left | Al | Entirely removed |
| 3 | 1.3 | 0.15 | 1.4 | Al | Entirely removed | Al | Entirely removed |
| 4 | 1.3 | 0.15 | 1.4 | Al | Entirely left | Al | Entirely left |
| 5 | 1.3 | 0.15 | 1.4 | Al | Partially left | Al | Entirely left |
| 6 | 1.3 | 0.15 | 1.4 | Al | Entirely removed | Al | Entirely left |
| 7 | 1.3 | 0.15 | 1.4 | Al | Entirely left | Al | Partially left |
| 8 | 1.3 | 0.15 | 1.4 | Al | Partially left | Al | Partially left |
| 9 | 1.3 | 0.15 | 1.4 | Al | Entirely removed | Al | Partially left |
| 10 | 1.3 | 0.15 | 1.4 | Al | Entirely left | Al | Tip end left |
| 11 | 1.3 | 0.15 | 1.4 | Al | Partially left | Al | Tip end left |
| 12 | 1.3 | 0.15 | 1.4 | Al | Entirely left | Al | Entirely removed |
| 13 | 1.3 | 0.15 | 1.4 | Al | Entirely left | Al | Entirely removed |
| 14 | 1.3 | 0.15 | 1.4 | Al | Entirely left | Al | Entirely removed |
| 15 | 1.3 | 0.15 | 1.4 | Al | Entirely left | Al | Entirely removed |
| 16 | 1.3 | 0.15 | 2.0 | Al | Partially left | Al | Entirely removed |
| 17 | 1.3 | 0.15 | 1.4 | Al | Partially left | Al | Entirely removed |
| 18 | 1.3 | 0.15 | 1.4 | Al | Partially left | Al | Entirely removed |
| 19 | 1.3 | 0.15 | 0.8 | Al | Partially left | Al | Entirely removed |
| 20 | 1.3 | 0.15 | 0.8 | Al | Partially left | Al | Entirely removed |
| 21 | 1.3 | 0.15 | 1.4 | Al | Partially left | Al | Entirely removed |
| 22 | 1.3 | 0.15 | 1.4 | Al | Partially left | Al | Entirely removed |
| 23 | 1.3 | 0.15 | 1.4 | Al | Partially left | Al | Entirely removed |
| 24 | 1.3 | 0.15 | 0.8 | Al | Partially left | Al | Entirely removed |
| 25 | 1.3 | 0.15 | 0.8 | Al | Partially left | Al | Entirely removed |

(continued)

| | First steel sheet | | | | | | |
|---|---|---|---|---|---|---|---|
| | Tensile strength | Carbon concentration | Sheet thickness | S1A surface | | S1B surface | |
| | T1 | C1 | h1 | Plating type | State | Plating type | State |
| No. | GPa | mass% | mm | - | - | - | - |
| 26 | 1.3 | 0.15 | 1.4 | Al | Partially left | Al | Entirely removed |
| 27 | 1.3 | 0.15 | 1.4 | Al | Partially left | Al | Entirely removed |
| 28 | 1.8 | 0.28 | 1.4 | Al | Partially left | Al | Entirely removed |
| 29 | 1.5 | 0.22 | 0.8 | Al | Partially left | Al | Entirely removed |
| The underline indicates that the sample is out of the scope of the present invention. | | | | | | | |

[Table 2]

| | Second steel sheet | | | | | | |
|---|---|---|---|---|---|---|---|
| | Tensile strength | Carbon concentration | Sheet thickness | S2A surface | | S2B surface | |
| | T2 | C2 | h2 | Plating type | State | Plating type | State |
| No. | GPa | mass% | mm | - | - | - | - |
| 1 | 1.8 | 0.28 | 1.8 | GA | Entirely left | GA | Entirely left |
| 2 | 1.8 | 0.28 | 1.8 | GA | Entirely left | GA | Entirely left |
| 3 | 1.8 | 0.28 | 1.8 | GA | Entirely left | GA | Entirely left |
| 4 | 1.8 | 0.28 | 1.8 | GA | Entirely left | GA | Entirely left |
| 5 | 1.8 | 0.28 | 1.8 | GA | Entirely left | GA | Entirely left |
| 6 | 1.8 | 0.28 | 1.8 | GA | Entirely left | GA | Entirely left |
| 7 | 1.8 | 0.28 | 1.8 | GA | Entirely left | GA | Entirely left |
| 8 | 1.8 | 0.28 | 1.8 | GA | Entirely left | GA | Entirely left |
| 9 | 1.8 | 0.28 | 1.8 | GA | Entirely left | GA | Entirely left |
| 10 | 1.8 | 0.28 | 1.8 | GA | Entirely left | GA | Entirely left |
| 11 | 1.8 | 0.28 | 1.8 | GA | Entirely left | GA | Entirely left |
| 12 | 1.8 | 0.28 | 1.8 | Non-plating | - | Non-plating | - |
| 13 | 1.8 | 0.28 | 1.8 | Al | Entirely left | Al | Entirely left |
| 14 | 1.8 | 0.28 | 1.8 | Al | Partially left | Al | Partially left |
| 15 | 1.8 | 0.28 | 1.8 | Al | Entirely removed | Al | Entirely removed |
| 16 | 1.8 | 0.28 | 2.3 | GA | Entirely left | GA | Entirely left |
| 17 | 1.8 | 0.28 | 2.3 | GA | Entirely left | GA | Entirely left |
| 18 | 1.8 | 0.28 | 1.6 | GA | Entirely left | GA | Entirely left |
| 19 | 1.8 | 0.28 | 2.3 | GA | Entirely left | GA | Entirely left |
| 20 | 1.8 | 0.28 | 1.0 | GA | Entirely left | GA | Entirely left |
| 21 | 1.8 | 0.28 | 1.8 | GA | Entirely left | GA | Entirely left |

(continued)

| | Second steel sheet | | | | | | |
|---|---|---|---|---|---|---|---|
| | Tensile strength | Carbon concentration | Sheet thickness | S2A surface | | S2B surface | |
| | T2 | C2 | h2 | Plating type | State | Plating type | State |
| No. | GPa | mass% | mm | - | - | - | - |
| 22 | 1.8 | 0.28 | 1.8 | GA | Entirely left | GA | Entirely left |
| 23 | 1.8 | 0.28 | 1.8 | GA | Entirely left | GA | Entirely left |
| 24 | 1.8 | 0.28 | 2.3 | GA | Entirely left | GA | Entirely left |
| 25 | 1.8 | 0.28 | 2.3 | GA | Entirely left | GA | Entirely left |
| 26 | 1.8 | 0.28 | 1.8 | GA | Entirely left | GA | Entirely left |
| 27 | 1.8 | 0.28 | 1.8 | GA | Entirely left | GA | Entirely left |
| 28 | 1.3 | 0.15 | 1.8 | Al | Entirely left | Al | Entirely left |
| 29 | 1.5 | 0.15 | 2.3 | GA | Entirely left | GA | Entirely left |

It was determined whether the tailored blank obtained by the above procedure satisfies (Formula 1) to (Formula 3) and (Formula 9), and the results are described in Table 3. A tensile test and an after-coating corrosion resistance test to be described later were performed and the results are shown in Table 4.

"Al concentration" described in Table 3 is the average Al concentration of the weld metal. A measurement method followed the above method for measuring the average Al concentration of the weld metal 13.

"LDa" described in Table 3 is a step difference between the surface A S1A of the first steel sheet and the surface A S2A of the second steel sheet. A measurement method followed the above step difference measurement method.

"LDb" described in Table 3 is a step difference between the surface B S1B of the first steel sheet and the surface B S2B of the second steel sheet. A measurement method followed the above step difference measurement method.

It was determined whether the obtained tailored blank satisfies (Formula 1) to (Formula 3), and the results are described in Table 3. When the formula was satisfied, it was described as "Satisfied", and when the formula was not satisfied, it was described as "Not satisfied".

The obtained tailored blank was hot-stamped to prepare a press-formed article. In hot stamping, the obtained tailored blank was retained in a furnace heated to 920°C for 4 minutes, and then the heated tailored blank was formed with a water-cooled die and quenched to prepare a flat press-formed article. It was determined whether the obtained press-formed article satisfies (Formula 5) to (Formula 7), and the results are described in Table 3. The tensile test and the after-coating corrosion resistance test to be described later were performed and the results are shown in Table 4.

(Tensile Test)

From the obtained press-formed article, a dumbbell-shaped test piece having a weld was collected as a test piece for a tensile strength test. The test piece was collected to have a parallel part distance of 20 mm, a parallel part width of 15 mm, and include a weld line over the total length in the width direction to be orthogonal to the longitudinal direction at the center portion of the parallel part. The tensile test was performed under the condition of a cross-head displacement speed of 10 mm/min until the test piece was fractured. Measurement was performed at N = 10, and a level at which fracture occurred in at least one of the weld metals was defined as NG.

(After-Coating Corrosion Resistance Test)

The obtained press-formed article was subjected to a chemical conversion treatment, and then electrodeposition coating was performed to prepare a coated press-formed article. The chemical conversion treatment was performed with a chemical treatment solution PB-SX35T manufactured by Nihon Parkerizing Co., Ltd. Thereafter, as an electrodeposition coating material, cationic electrodeposition coating material POWERNICS 110 manufactured by Nippon Paint Holdings Co., Ltd. was used, and electrodeposition coating was applied to the press-formed article with such that an electrodeposition film thickness becomes about 15 μm. The press-formed article subjected to electrodeposition coating was washed with water and then heated and baked at 170°C for 20 minutes to prepare a coated press-formed article.

From the obtained coated press-formed article, a rectangular test piece having a weld was collected as a test piece for the after-coating corrosion resistance test. The test plate was collected to have a length of 65 mm and a width of 100 mm and include a weld line over the total length in the length direction at the center portion of the width.

In the after-coating corrosion resistance test, corrosion resistance after coating was evaluated in a corrosion state after 360 cycles (120 days) using a vehicle component external appearance corrosion test JASO M610-92. Measurement was performed at N = 10, and a level at which corrosion was confirmed in at least one of the weld metals was defined as NG.

[Table 3]

| | Weld metal | Step difference | | Determination | | | | |
|---|---|---|---|---|---|---|---|---|
| | Al concentration | LDa | LDb | (Formula 1) (Formula 5) | (Formula 2) | (Formula 6) | (Formula 3) (Formula 7) | (Formula 9) |
| No. | mass% | mm | mm | - | - | - | - | - |
| 1 | 0.29 | 0 | 0.4 | Satisfied | Satisfied | Satisfied | Satisfied | Satisfied |
| 2 | 0.21 | 0 | 0.4 | Satisfied | Satisfied | Satisfied | Satisfied | Satisfied |
| 3 | 0.04 | 0 | 0.4 | Satisfied | Satisfied | Satisfied | Satisfied | Satisfied |
| 4 | 0.55 | 0 | 0.4 | Satisfied | Satisfied | Satisfied | Satisfied | Satisfied |
| 5 | 0.46 | 0 | 0.4 | Satisfied | Satisfied | Satisfied | Satisfied | Satisfied |
| 6 | 0.29 | 0 | 0.4 | Satisfied | Satisfied | Satisfied | Satisfied | Satisfied |
| 7 | 0.46 | 0 | 0.4 | Satisfied | Satisfied | Satisfied | Satisfied | Satisfied |
| 8 | 0.38 | 0 | 0.4 | Satisfied | Satisfied | Satisfied | Satisfied | Satisfied |
| 9 | 0.21 | 0 | 0.4 | Satisfied | Satisfied | Satisfied | Satisfied | Satisfied |
| 10 | 0.34 | 0 | 0.4 | Satisfied | Satisfied | Satisfied | Satisfied | Satisfied |
| 11 | 0.26 | 0 | 0.4 | Satisfied | Satisfied | Satisfied | Satisfied | Satisfied |
| 12 | 0.29 | 0 | 0.4 | Satisfied | Satisfied | Satisfied | Satisfied | Satisfied |
| 13 | 0.81 | 0 | 0.4 | Satisfied | Satisfied | Satisfied | Satisfied | Satisfied |
| 14 | 0.63 | 0 | 0.4 | Satisfied | Satisfied | Satisfied | Satisfied | Satisfied |
| 15 | 0.29 | 0 | 0.4 | Satisfied | Satisfied | Satisfied | Satisfied | Satisfied |
| 16 | 0.16 | 0 | 0.3 | Satisfied | Satisfied | Satisfied | Satisfied | Satisfied |
| 17 | 0.18 | 0 | 0.9 | Satisfied | Satisfied | Satisfied | Satisfied | Satisfied |
| 18 | 0.22 | 0 | 0.2 | Satisfied | Satisfied | Satisfied | Satisfied | Satisfied |
| 19 | 0.21 | 0 | 1.5 | Satisfied | Satisfied | Satisfied | Satisfied | Satisfied |
| 20 | 0.34 | 0 | 0.2 | Satisfied | Satisfied | Satisfied | Satisfied | Satisfied |
| 21 | 0.21 | 0.1 | 0.3 | Satisfied | Satisfied | Satisfied | Satisfied | Satisfied |
| 22 | 0.21 | 0.1 | 0.5 | Satisfied | Satisfied | Satisfied | Satisfied | Satisfied |
| 23 | 0.21 | 0.2 | 0.6 | Satisfied | Satisfied | Satisfied | Satisfied | Satisfied |
| 24 | 0.21 | 0.1 | 1.4 | Satisfied | Satisfied | Satisfied | Satisfied | Satisfied |
| 25 | 0.21 | 0.1 | 1.6 | Satisfied | Satisfied | Satisfied | Satisfied | Satisfied |
| 26 | 0.21 | 0.3 | 0.1 | Satisfied | Satisfied | Satisfied | Not satisfied | Not satisfied |
| 27 | 0.21 | 0.2 | 0.2 | Satisfied | Satisfied | Satisfied | Not satisfied | Satisfied |
| 28 | 0.72 | 0 | 0.4 | Satisfied | Not satisfied | Not satisfied | Satisfied | Satisfied |
| 29 | 0.21 | 0 | 1.5 | Satisfied | Satisfied | Satisfied | Satisfied | Satisfied |
| The underline indicates that the sample is out of the scope of the present invention. | | | | | | | | |

[Table 4]

| | Evaluation | | |
|---|---|---|---|
| | Number of fractures of weld metal | Number of times of occurrence of corrosion of weld metal | |
| No. | - | - | |
| 1 | 0/10 | 0/10 | Example of present invention |
| 2 | 0/10 | 0/10 | Example of present invention |
| 3 | 0/10 | 7/10 | Comparative Example |
| 4 | 9/10 | 0/10 | Comparative Example |
| 5 | 8/10 | 0/10 | Comparative Example |
| 6 | 7/10 | 0/10 | Comparative Example |
| 7 | 3/10 | 0/10 | Comparative Example |
| 8 | 3/10 | 0/10 | Comparative Example |
| 9 | 2/10 | 0/10 | Comparative Example |
| 10 | 0/10 | 0/10 | Example of present invention |
| 11 | 0/10 | 0/10 | Example of present invention |
| 12 | 0/10 | 0/10 | Example of present invention |
| 13 | 0/10 | 0/10 | Example of present invention |
| 14 | 0/10 | 0/10 | Example of present invention |
| 15 | 0/10 | 0/10 | Example of present invention |
| 16 | 0/10 | 0/10 | Example of present invention |
| 17 | 0/10 | 0/10 | Example of present invention |
| 18 | 0/10 | 0/10 | Example of present invention |
| 19 | 0/10 | 0/10 | Example of present invention |
| 20 | 0/10 | 0/10 | Example of present invention |
| 21 | 0/10 | 0/10 | Example of present invention |
| 22 | 0/10 | 0/10 | Example of present invention |
| 23 | 0/10 | 0/10 | Example of present invention |
| 24 | 0/10 | 0/10 | Example of present invention |
| 25 | 0/10 | 0/10 | Example of present invention |
| 26 | 2/10 | 0/10 | Comparative Example |
| 27 | 1/10 | 0/10 | Comparative Example |
| 28 | 8/10 | 0/10 | Comparative Example |
| 29 | 0/10 | 0/10 | Example of present invention |

In No. 3, exposed portions were provided on both the surface S1A and the surface S1B, the Al concentration of the weld metal was overall low, and corrosion resistance defects of the weld metal frequently occurred.

In Nos. 4 to 9, Al plating in contact with the weld metal remained on the surface S1B. That is, the surface S1B of the examples was not provided with the base exposed portion in contact with the weld metal. As a result, Al was enriched at the weld metal toe portion where stress was concentrated, and thus fracture occurred in the weld metal.

In Nos. 26 and 27, (Formula 3) and (Formula 7) were not satisfied, stress was concentrated at the toe portion on the S1A side of the weld metal enriched in Al, and fracture occurred in the weld metal.

In No. 28, (Formula 2) and (Formula 6) were not satisfied, stress was concentrated at the toe portion on the S2B side of the weld metal enriched in Al, and fracture occurred in the weld metal.

Meanwhile, examples satisfying requirements of the present invention were not fractured in the weld metal and fractured in the base metal of the first steel sheet, and strength of the weld metal was excellent. In the examples, the corrosion resistance of the weld metal was also stable.

INDUSTRIAL APPLICABILITY

The tailored blank according to the present embodiment can ensure both strength and corrosion resistance of the weld metal, and thus has high industrial applicability.

REFERENCE SIGNS LIST

1 Tailored blank
11 First steel sheet
12 Second steel sheet
13 Weld metal
131 Toe portion
14 Aluminum-based plated layer
141 Intermetallic compound layer
142 Surface layer
15 Base exposed portion
16 Zinc-based plated layer
h1 Sheet thickness of first steel sheet
h2 Sheet thickness of second steel sheet
SA Surface A of tailored blank
SB Surface B of tailored blank
S1A Surface A of first steel sheet
S2A Surface A of second steel sheet
LDa Step difference between surface A of first steel sheet and surface A of second steel sheet
S1B Surface B of first steel sheet
S2B Surface B of second steel sheet
LDb Step difference between surface B of first steel sheet and surface B of second steel sheet

**Claims**

**1.** A tailored blank comprising:

a first steel sheet;
a second steel sheet butt-welded to the first steel sheet; and
a weld metal connecting an end portion of the first steel sheet and an end portion of the second steel sheet, wherein
an average Al concentration of the weld metal is 0.05 to 1.00 mass%,
a sheet thickness h1 and a carbon concentration C1 of the first steel sheet and a sheet thickness h2 and a carbon concentration C2 of the second steel sheet satisfy Formulas 1 and 2 below,

$$h2/h1 \geq 1.1 \ldots \text{ (Formula 1)},$$

$$h1 \times C1 \leq h2 \times C2 \ldots \text{ (Formula 2)},$$

when surfaces of the first steel sheet and the second steel sheet on a surface A side of the tailored blank are defined as a surface A S1A of the first steel sheet and a surface A S2A of the second steel sheet, respectively, and surfaces of the first steel sheet and the second steel sheet on a surface B side of the tailored blank are defined as a surface B S1B of the first steel sheet and a surface B S2B of the second steel sheet, respectively,
a step difference LDa between the surface A S1A of the first steel sheet and the surface A S2A of the second steel sheet and a step difference LDb between the surface B S1B of the first steel sheet and the surface B S2B of the second steel sheet satisfy Formula 3 below,

$$LDb \geq 1.1 \times LDa\ldots \text{ (Formula 3)},$$

the first steel sheet includes an aluminum-based plated layer on the surface A S1A of the first steel sheet,
the aluminum-based plated layer disposed on the surface A S1A of the first steel sheet is in contact with the weld metal,
the first steel sheet includes a base exposed portion on the surface B S1B of the first steel sheet, and
the base exposed portion on the surface B S1B of the first steel sheet is in contact with the weld metal.

**2.** The tailored blank according to claim 1, wherein the second steel sheet is an aluminum-based plated steel sheet, a zinc-based plated steel sheet, or a non-plated steel sheet.

**3.** The tailored blank according to claim 1 or 2, wherein the sheet thickness h1 of the first steel sheet and the sheet thickness h2 of the second steel sheet satisfy Formula 4 below,

$$h2/h1 \geq 1.5\ldots \text{ (Formula 4)}.$$

**4.** The tailored blank according to claim 1 or 2, wherein

the first steel sheet includes an aluminum-based plated layer on the surface B S1B of the first steel sheet, and
the base exposed portion on the surface B S1B of the first steel sheet is disposed between the aluminum-based plated layer of the surface B S1B of the first steel sheet and the weld metal.

**5.** The tailored blank according to claim 1 or 2, wherein the surface A S1A of the first steel sheet and the surface A S2A of the second steel sheet are on substantially the same plane.

**6.** The tailored blank according to claim 1 or 2, wherein the carbon concentration C1 is different from the carbon concentration C2.

**7.** A press-formed article comprising:

a first steel material;
a second steel material butt-welded to the first steel material; and
a weld metal connecting an end portion of the first steel material and an end portion of the second steel material, wherein
an average Al concentration of the weld metal is 0.05 to 1.00 mass%,
a thickness H1 and a tensile strength T1 of the first steel material and a thickness H2 and a tensile strength T2 of the second steel material satisfy Formulas 5 and 6 below,

$$H2/H1 \geq 1.1\ldots \text{ (Formula 5)},$$

$$H1 \times T1 \leq H2 \times T2\ldots \text{ (Formula 6)},$$

when surfaces of the first steel material and the second steel material on a surface A side of the press-formed article are defined as a surface A S3A of the first steel material and a surface A S4A of the second steel material, respectively, and surfaces of the first steel material and the second steel material on a surface B side of the press-formed article are defined as a surface B S3B of the first steel material and a surface B S4B of the second steel material, respectively,
a step difference LD2a between the surface A S3A of the first steel material and the surface A S4A of the second steel material and a step difference LD2b between the surface B S3B of the first steel material and the surface B S4B of the second steel material satisfy Formula 7 below,

$$LD2b \geq 1.1 \times LD2a\ldots \text{ (Formula 7)},$$

the first steel material includes an aluminum-based plated layer on the surface A S3A of the first steel material,

the aluminum-based plated layer disposed on the surface A S3A of the first steel material is in contact with the weld metal,
the first steel material includes a base exposed portion on the surface B S3B of the first steel material, and
the base exposed portion of the surface B S3B of the first steel material is in contact with the weld metal.

**8.** The press-formed article according to claim 7, wherein the second steel material is an aluminum-based plated steel material, a zinc-based plated steel material, or a non-plated steel material.

**9.** The press-formed article according to claim 7 or 8, wherein the sheet thickness H1 of the first steel material and the sheet thickness H2 of the second steel material satisfy Formula 8 below,

$$H2/H1 \geq 1.5 \ldots \text{(Formula 8)}.$$

**10.** The press-formed article according to claim 7 or 8, wherein

the first steel material includes an aluminum-based plated layer on the surface B S3B of the first steel material, and
the base exposed portion on the surface B S3B of the first steel material is disposed between the aluminum-based plated layer of the surface B S3B of the first steel material and the weld metal.

**11.** The press-formed article according to claim 7 or 8, wherein the surface A S3A of the first steel material and the surface A S4A of the second steel material are on substantially the same plane.

**12.** A method for manufacturing a tailored blank, the method comprising:

a step of butt-welding a first steel sheet and a second steel sheet to form a weld metal connecting an end portion of the first steel sheet and an end portion of the second steel sheet, wherein
an average Al concentration of the weld metal is 0.05 to 1.00 mass%,
a sheet thickness h1 and a carbon concentration C1 of the first steel sheet and a sheet thickness h2 and a carbon concentration C2 of the second steel sheet satisfy Formulas 1 and 2 below,

$$h2/h1 \geq 1.1 \ldots \text{(Formula 1)},$$

$$h1 \times C1 \leq h2 \times C2 \ldots \text{(Formula 2)},$$

when surfaces of the first steel sheet and the second steel sheet on a surface A side of the tailored blank are defined as a surface A S1A of the first steel sheet and a surface A S2A of the second steel sheet, respectively, and surfaces of the first steel sheet and the second steel sheet on a surface B side of the tailored blank are defined as a surface B S1B of the first steel sheet and a surface B S2B of the second steel sheet, respectively,
a step difference LDa between the surface A S1A of the first steel sheet and the surface A S2A of the second steel sheet and a step difference LDb between the surface B S1B of the first steel sheet and the surface B S2B of the second steel sheet satisfy Formula 3 below,

$$LDb \geq 1.1 \times LDa \ldots \text{(Formula 3)},$$

an aluminum-based plated layer is disposed on the surface A S1A of the first steel sheet,
the aluminum-based plated layer disposed on the surface A S1A of the first steel sheet is brought into contact with the weld metal,
a base exposed portion is provided on the surface B S1B of the first steel sheet, and
the base exposed portion on the surface B S1B of the first steel sheet is brought into contact with the weld metal.

**13.** The method for manufacturing a tailored blank according to claim 12, wherein

the aluminum-based plated layer is disposed on the side B S1B of the first steel sheet,
the method for manufacturing a tailored blank further comprises a step of forming the base exposed portion by removing a portion to be welded on the surface B S1B of the first steel sheet and the aluminum-based plated layer in the vicinity of the portion to be welded, and

the base exposed portion of the surface B S1B of the first steel sheet is disposed between the aluminum-based plated layer of the surface B S1B of the first steel sheet and the weld metal.

**14.** The method for manufacturing a tailored blank according to claim 13, wherein the aluminum-based plated layer is removed on an entire area of the portion to be welded.

**15.** The method for manufacturing a tailored blank according to claim 13, wherein the aluminum-based plated layer remains at a tip end portion of the surface B S1B of the first steel sheet in the portion to be welded.

**16.** The method for manufacturing a tailored blank according to claim 14 or 15, the method further comprising
a step of removing the portion to be welded on the surface A S1A of the first steel sheet and a surface layer of the aluminum-based plated layer in the vicinity of the portion to be welded and leaving an intermetallic compound layer of the aluminum-based plated layer.

**17.** The method for manufacturing a tailored blank according to claim 12 or 13, wherein the carbon concentration C1 is different from the carbon concentration C2.

**18.** A method for manufacturing a press-formed article, the method comprising
a step of hot-stamping the tailored blank according to claim 1 or 2.

# FIG. 1

SB
1
131
13
131
15
14
S2B
LDb
S1B
h2
h1
LDa
S2A
S1A
131
131
141
142
16
12
SA
11

# FIG. 2

15
14
S2B
S1B
S2A
S1A
16
12
141
142
11

FIG. 3

15
14
S2B
S1B
S2A
S1A
16
12
141
142
11

FIG. 4

15
14
S2B
S1B
S2A
S1A
16
12
141
142
11

FIG. 5

15
14
S2B
S1B
S2A
S1A
16
12
141
142
11

FIG. 6

13
13
12
15
11
15
12
14
16

FIG. 7

142
15
14
S2B
S1B
S2A
S1A
16
12
141
141
142
11

FIG. 8

SB
2
231
23
231
15
24
S4B
LD2b
S3B
H2
H1
LD2a
S4A
231
231
141
S3A
26
22
SA
21

# INTERNATIONAL SEARCH REPORT

International application No.
**PCT/JP2024/002953**

## A. CLASSIFICATION OF SUBJECT MATTER

***B23K 9/23***(2006.01)i; ***B21D 22/20***(2006.01)i; ***B23K 26/21***(2014.01)i; ***B23K 26/36***(2014.01)i; ***B23K 26/322***(2014.01)i; ***B23K 31/00***(2006.01)i; ***B23K 35/30***(2006.01)i; ***C21D 1/18***(2006.01)i; ***C21D 9/00***(2006.01)i; ***C21D 9/50***(2006.01)i; ***C22C 21/02***(2006.01)i; ***C22C 38/00***(2006.01)i; ***C22C 38/58***(2006.01)i

FI: B23K9/23 A; B21D22/20 H; B21D22/20 E; B23K26/322; B23K26/21 F; B23K26/36; B23K31/00 P; C22C38/00 301Z; C22C38/00 301T; C22C38/00 301B; C22C21/02; C21D9/00 A; C21D1/18 C; C21D9/50 101B; B23K35/30 320A; C22C38/58

According to International Patent Classification (IPC) or to both national classification and IPC

## B. FIELDS SEARCHED

Minimum documentation searched (classification system followed by classification symbols)

B23K9/23; B21D22/20; B23K26/21; B23K26/36; B23K26/322; B23K31/00; B23K35/30; C21D1/18; C21D9/00; C21D9/50; C22C21/02; C22C38/00; C22C38/58

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

## C. DOCUMENTS CONSIDERED TO BE RELEVANT

| Category* | Citation of document, with indication, where appropriate, of the relevant passages | Relevant to claim No. |
|---|---|---|
| A | WO 2019/245025 A1 (NIPPON STEEL CORPORATION) 26 December 2019 (2019-12-26) entire text, all drawings | 1-18 |
| A | WO 2019/244524 A1 (NIPPON STEEL CORPORATION) 26 December 2019 (2019-12-26) entire text, all drawings | 1-18 |
| A | WO 2021/117878 A1 (NIPPON STEEL CORPORATION) 17 June 2021 (2021-06-17) entire text, all drawings | 1-18 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 March 2024** | **26 March 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**
**Information on patent family members**

International application No.
**PCT/JP2024/002953**

| Patent document cited in search report | Publication date (day/month/year) | Patent family member(s) | Publication date (day/month/year) |
|---|---|---|---|
| WO 2019/245025 A1 | 26 December 2019 | US 2021/0262075 A1<br>entire text, all drawings<br>EP 3812082 A1<br>KR 10-2021-0010915 A<br>CN 112334266 A | |
| WO 2019/244524 A1 | 26 December 2019 | US 2021/0222804 A1<br>entire text, all drawings<br>US 2020/0271247 A1<br>EP 3812083 A1<br>KR 10-2021-0003186 A<br>CN 112437710 A<br>KR 10-2022-0136507 A<br>KR 10-2022-0136508 A<br>KR 10-2020-0067884 A | |
| WO 2021/117878 A1 | 17 June 2021 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2023011644 A
- JP 2009534529 W
- JP 2022515425 W
- WO 2019093440 A
- WO 2019244524 A